(19) Europäisches Patentamt
European Patent Office
Office européen des brevets

(11) **EP 4 692 015 A1**

(12) **EUROPEAN PATENT APPLICATION**
published in accordance with Art. 153(4) EPC

(43) Date of publication:
**11.02.2026 Bulletin 2026/07**

(21) Application number: **24780471.9**

(22) Date of filing: **27.03.2024**

(51) International Patent Classification (IPC):
*C03C 27/12* (2006.01)   *B60J 1/00* (2006.01)
*B60J 1/02* (2006.01)   *C03C 17/34* (2006.01)
*G02B 5/08* (2006.01)   *G02B 27/01* (2006.01)

(52) Cooperative Patent Classification (CPC):
**B32B 17/00; B60J 1/00; B60J 1/02; C03C 17/34;
G02B 5/08; G02B 27/01**

(86) International application number:
**PCT/JP2024/012280**

(87) International publication number:
**WO 2024/204369 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023052990**

(71) Applicant: **AGC INC.
Chiyoda-ku,
Tokyo 1008405 (JP)**

(72) Inventor: **AOKI, Tokihiko
Tokyo 100-8405 (JP)**

(74) Representative: **TBK
Bavariaring 4-6
80336 München (DE)**

(54) **LAMINATED GLASS AND METHOD FOR MANUFACTURING SAME**

(57)    Provided is laminated glass having a coating film and an interlayer film with a wedge-shaped cross section, in which foaming is less likely to occur in the interlayer film.

The laminated glass of the present disclosure includes: a curved first glass plate; a curved second glass plate; and an interlayer film arranged between the first glass plate and the second glass plate to bond the first glass plate and the second glass plate together, wherein: the first glass plate has a fourth surface and a third surface; the second glass plate has a first surface and a second surface; the fourth surface is a surface of the first glass plate facing away from the interlayer film; the third surface is a surface of the first glass plate facing the interlayer film; the second surface is a surface of the second glass plate facing the interlayer film; the first surface is a surface of the second glass plate facing away from the interlayer film; the laminated glass includes a coating film on the second surface, the third surface or the fourth surface; the coating film is configured to show a visible light transmittance of 10% or higher relative to p-polarized light incident at an incident angle of 65 deg; and the interlayer film includes a wedge-shaped cross-section region that gradually increases in thickness from a bottom edge to a top edge in a state where the laminated glass is installed in a vehicle, and is configured to satisfy the formula $(\beta - \alpha) > 0.05$ [mrad] where, assuming, in plan view, a straight line passing through a first point that bisects the top edge and a second point that bisects the bottom edge, $\alpha$ represents a local wedge angle at a position 100 mm away from the second point on the straight line; and $\beta$ represents a local wedge angle at a position 500 mm away from the second point on the straight line.

Fig. 4

**Description**

TECHNICAL FIELD

The present invention relates to laminated glass and a method for producing laminated glass.

BACKGROUND ART

For head-up displays (hereinafter also referred to as HUD), known is a technique in which a p-polarized light reflective coating film is provided to laminated glass and irradiated with p-polarized light to improve image brightness and ensure visibility even during wearing of polarized sunglasses. There is also known a technique in which such a coating film is used in combination with a wedge-shaped cross-section interlayer film to reduce double imaging.

PRIOR ART DOCUMENTS

PATENT DOCUMENTS

Patent Document 1: WO 2022/207004

DISCLOSURE OF INVENTION

TECHNICAL PROBLEM

When laminated glass with a p-polarized light reflective coating film is placed in e.g. a high-temperature environment for a long time, foaming may occur in the interlayer film of the laminated glass, mainly in the vicinity of the bottom edge of the laminated glass. This foaming is caused due to a situation where, by applying the coating film to one of the vehicle interior- and exterior-side glass plates of the laminated glass, the glass plates differ in behavior during bending thereof according to the vehicle design so that peripheral portions of the glass plates have different shapes, and more specifically, different curved shapes. Particularly in the case of laminated glass having an interlayer film with a wedge-shaped cross section that increases in thickness from the bottom edge side to the top edge side, the occurrence of foaming in the interlayer film is prominent in the vicinity of the bottom edge of the laminated glass.

The present invention has been made in view of the above problem. It is an object of the present invention to provide laminated glass of the type having a coating film and an interlayer film with a wedge-shaped cross section, in which foaming is less likely to occur in the interlayer film.

SOLUTION TO PROBLEM

One aspect of the present disclosure is directed to laminated glass comprising: a curved first glass plate; a curved second glass plate; and an interlayer film arranged between the first glass plate and the second glass plate to bond the first glass plate and the second glass plate together, wherein: the first glass plate has a fourth surface and a third surface; the second glass plate has a first surface and a second surface; the fourth surface is a surface of the first glass plate facing away from the interlayer film; the third surface is a surface of the first glass plate facing the interlayer film; the second surface is a surface of the second glass plate facing the interlayer film; the first surface is a surface of the second glass plate facing away from the interlayer film; the laminated glass comprises a coating film provided on the second surface, the third surface or the fourth surface; the coating film is configured to show a visible light reflectance of 10% or higher relative to p-polarized visible light incident at an incident angle of 65 deg; and the interlayer film includes a wedge-shaped cross-section region that gradually increases in thickness from a bottom edge toward a top edge in a state where the laminated glass is installed in a vehicle, and is configured to satisfy the formula $(\beta - \alpha) > 0.05$ [mrad] where, assuming, in plan view, a straight line passing through a first point that bisects the top edge and a second point that bisects the bottom edge, $\alpha$ represents a local wedge angle at a position 100 mm away from the second point on the straight line; and $\beta$ represents a local wedge angle at a position 500 mm away from the second point on the straight line.

ADVANTAGEOUS EFFECTS OF INVENTION

According to one aspect of the present disclosure, laminated glass of the type having a coating film and an interlayer film with a wedge-shaped cross section is provided in which foaming is less likely to occur in the interlayer film.

BRIEF DESCRIPTION OF DRAWINGS

Fig. 1 is a schematic diagram of a HUD system according to the first embodiment.
Figs. 2A and 2B are illustrative views of laminated glass according to the first embodiment.
Fig. 3 is a diagram (part 1) for explaining a local wedge angle.
Fig. 4 is a diagram (part 2) for explaining a local wedge angle.
Figs. 5A to 5C are views (part 1) illustrating a method for producing laminated glass.
Figs. 6A and 6B are views (part 2) illustrating the method for producing laminated glass.
Fig. 7 is a cross-sectional view of part of laminated glass according to Modification 1 of the first embodiment.
Fig. 8 is a cross-sectional view of laminated glass according to Modification 2 of the first embodiment.
Fig. 9 is a plan view of laminated glass according to Modification 3 of the first embodiment.
Figs. 10A and 10B are cross-sectional views of laminated glass according to Modification 4 of the first embodiment.
Fig. 11 is a diagram for explaining Examples of the present invention and Comparative Examples.

DESCRIPTION OF EMBODIMENTS

Hereinafter, embodiments of the present invention will be described below with reference to the drawings. In the respective drawings, the same components are designated by the same reference numerals, and duplicate descriptions thereof may be omitted. In each drawing, the size and shape may be partially exaggerated to facilitate understanding of the features of the present invention.

The term "vehicle" as used herein refers to a mobile object in which laminated glass can be installed, as typified by not only an automobile but also a train, a ship and an airplane etc.

The term "in plan view" as used herein means viewing an object from the direction of a normal line passing through the center of gravity of a main surface of the object, and a shape in plan view is hereinafter referred to as a planar shape.

The terms "top" and "bottom" as used herein respectively refer to top and bottom sides in a state where laminated glass is installed in a vehicle.

Further, an outermost edge of a certain member is hereinafter also referred to as a "peripheral edge"; and a portion of a certain member having a width inscribed in a "peripheral edge" is hereinafter also referred to as a "peripheral edge portion".

<First Embodiment>

[HUD System]

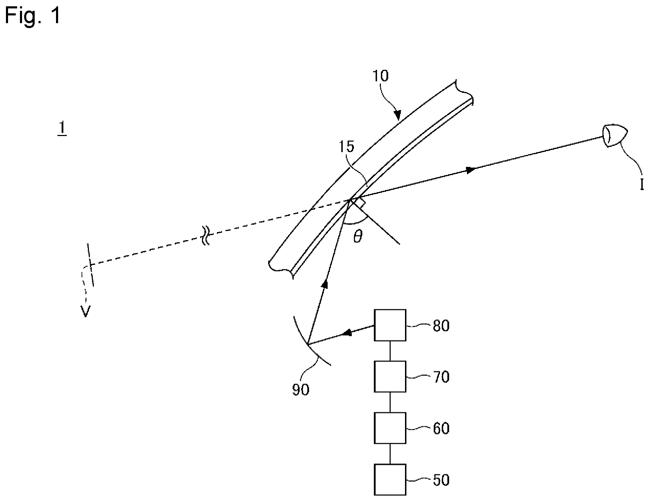

Fig. 1 is a schematic diagram of a HUD system according to the first embodiment. A HUD system 1 shown in Fig. 1 has laminated glass 10, a light source 50, a first optical system 60, an image display element 70, a second optical system 80 and a concave mirror 90. The HUD system 1 is herein configured as a head-up display system for a vehicle, which projects a virtual image toward the vehicle exterior side of the laminated glass 10. In the HUD system 1, the first and second optical systems 60 and 80 may be provided as needed.

The laminated glass 10 is, for example, a windshield of a vehicle, on which p-polarized visible light is incident from the vehicle interior side. The laminated glass 10 has a coating film 15 provided on a region thereof on which p-polarized visible light reflected by the concave mirror 90 is incident. The coating film 15 may be formed on the entire surface of the laminated glass 10, or may be formed only on a part of the laminated glass 10. It suffices that the coating film 15 is formed on at least the region onto which p-polarized light from the light source 50 is incident. To make edges of the coating film 15 inconspicuous, the edges of the coating film 15 may be located near an outer periphery of the laminated glass 10 or on or near shielding layers.

The light source 50 is a light source that emits p-polarized visible light. Examples of the light source 50 include a light emitting diode, a laser and the like. The light source 50 may have an optical component such as a polarization plate or lens that converts s-polarized light to p-polarized light. The light source 50 is composed of, for example, three light sources: a red light source, a green light source and a blue light source.

The first optical system 60 is composed of, for example, a prism or lens etc. that synthesizes lights emitted from a plurality of light sources. The image display element 70 is an element that creates an intermediate image. Examples of the image display element 70 include a liquid crystal display element, an organic electroluminescence element and the like. The second optical system 80 is composed of, for example, a lens or reflective mirror etc. The concave mirror 90 is an optical component having a reflective surface of predetermined curvature to reflect an intermediate image, and is positioned closest to the laminated glass 10 among the optical components on the optical path between the light source 50 and the laminated glass 10.

In the HUD system 1, light emitted from the light source 50 passes through the first optical system 60 and reaches the image display element 70. Then, the image display element 70 creates an intermediate image. The intermediate image created by the image display element 70 is enlarged by passing through the second optical system 80 and being reflected by the concave mirror 90, and is transmitted to the coating film 15 of the laminated glass 10. The intermediate image transmitted to the coating film 15 is reflected by mainly the coating film 15 toward a passenger's viewpoint I so that the passenger recognizes the intermediate image as a virtual image V (HUD image) as if floating in front of the laminated glass 10. The passenger is, for example, a driver of the vehicle.

In Fig. 1, $\theta$ is an angle at which p-polarized visible light from the light source 50 is incident on the coating film 15 through the above optical systems. The incident angle $\theta$ may be 57 deg (Brewster angle), may be larger than 57 deg, or may be smaller than 57 deg.

As long as the HUD system 1 is provided with at least the laminated glass 10 and the light source 50, the other configurations are optional. The HUD system 1 may be configured as the laser scanning type in which laser light is scanned by a laser scanning unit such as MEMS (Micro Electro Mechanical Systems).

[Laminated Glass]

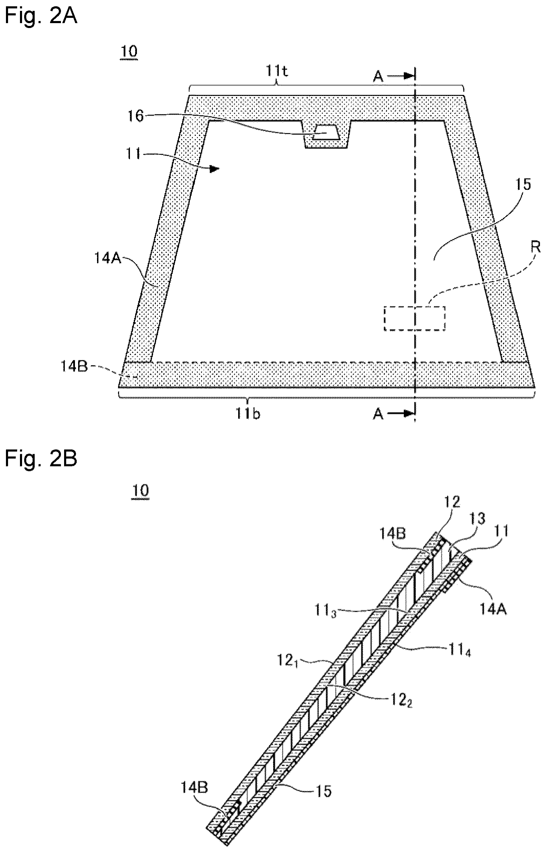

Figs. 2A and 2B illustrate laminated glass according to the first embodiment, where Fig. 2A is a schematic view of the laminated glass as viewed from the vehicle interior side toward the vehicle exterior side; and Fig. 2B is a cross-sectional view of the laminated glass as taken along line A-A of Fig. 2A.

The laminated glass 10 is vehicular laminated glass having a first glass plate 11, a second glass plate 12, an interlayer film 13 and shielding layers 14A and 14B as shown in Fig. 2B. The laminated glass 10 is applicable as, for example, a windshield of a vehicle.

The first glass plate 11 and the second glass plate 12 are laminated together via the interlayer film 13. The first glass plate 11 is situated on the first side that is to be the vehicle interior side when the laminated glass 10 is installed in the vehicle; whereas the second glass plate 12 is situated on the second side that is to be the vehicle exterior side when the laminated glass 10 is installed in the vehicle. Here, the shielding layers 14A and 14B are provided as needed.

The laminated glass 10 has a complex curved shape curved, for example, in both vertical and horizontal directions when installed in the vehicle. The complex curved shape is however not limited to such a shape curved in the vertical and horizontal directions when installed in the vehicle, and can be a shape curved in any two or more different directions. The laminated glass 10 may alternatively have a single curved shape curved only in one of the vertical and horizontal directions when installed in the vehicle. The single curved shape is however not limited to such a shape curved only in either vertical direction or horizontal direction when installed in the vehicle, and can be a shape curved only in any one direction.

The laminated glass 10 is preferably curved to be convex toward the vehicle exterior side. In other words, the second glass plate 12 is preferably curved to be convex toward the side opposite the interlayer film 13; and the first glass plate 11 is preferably curved to be convex toward the interlayer film 13.

The first glass plate 11 is a vehicle-interior-side glass plate to be located on the vehicle interior side (first side) when the laminated glass 10 is installed in the vehicle. The first glass plate 11 is curved in shape. The first glass plate 11 has a fourth surface $11_4$ facing away from the interlayer film 13 and a third surface $11_3$ facing the interlayer film 13. In plan view as shown in Fig. 2A, reference numeral 11t denotes a top edge located on the top side when the laminated glass 10 is installed in the vehicle; and reference numeral 11b denotes a bottom edge located on the bottom side when the laminated glass 10 is installed in the vehicle. The first glass plate 11 has a top edge 11t, a bottom edge 11b and two side edges connecting the top edge 11t and the bottom edge 11b in plan view.

The second glass plate 12 is a vehicle-exterior-side glass plate to be located on the vehicle exterior side (second side) when the laminated glass 10 is installed in the vehicle. The second glass plate 12 is curved in shape. The second glass plate 12 has a second surface $12_2$ facing the interlayer film 13 and a first surface $12_1$ facing away from the interlayer film 13. As in the case of the first glass plate 11, the second glass plate 12 has a top edge, a bottom edge and two side edges connecting the top edge and the bottom edges in plan view.

In the laminated glass 10, the minimum value of the curvature radius is preferably greater than or equal to 500 mm and smaller than or equal to 100,000 mm. The curvature radius of the first glass plate 11 and the curvature radius of the second glass plate 12 may be the same or different. In the case where the curvature radius of the first glass plate 11 and the curvature radius of the second glass plate 12 are different, the curvature radius of the first glass plate 11 is preferably smaller than the curvature radius of the second glass plate 12.

The first glass plate 11 and the second glass plate 12 are a pair of glass plates opposed to each other, and the interlayer film 13 is arranged between the pair of glass plates. The first glass plate 11 and the second glass plate 12 are fixed together with the interlayer film 13 held therebetween. The interlayer film 13 is a film that bonds the first glass plate 11 and the second glass plate 12 together.

It is preferable that an outer periphery of the interlayer film 13 has been subjected to edge treatment. In other words, it is preferable that the outer periphery of the interlayer film 13 has been processed so as not to protrude significantly from outer peripheries of the first and second glass plates 11 and 12. The amount of protrusion of the outer periphery of the interlayer film 13 from the outer peripheries of the first and second glass plates 11 and 12 is preferably 150 $\mu$m or less with a view to not impairing the appearance of the laminated glass. The details of the first glass plate 11, the second glass plate 12 and the interlayer film 13 will be described later.

The shielding layers 14A and 14B are opaque layers provided e.g. in a strip shape along peripheral edge portions of the laminated glass 10. For example, the shielding layer 14A, 14B may be an opaque colored ceramic layer, in which the color of the shielding layer is arbitrary but is preferably a dark color such as black, brown, gray or dark blue, more preferably black. The shielding layer 14A, 14B may alternatively be a colored interlayer or colored film having light blocking properties, a combination of a colored interlayer film and a colored ceramic layer, or a layer having a dimming function. The colored film may be integrated with an infrared reflective film.

The width of the shielding layer 14A, 14B in plan view is, for example, approximately from 10 mm to 250 mm, preferably from 20 mm to 220 mm, more preferably from 30 mm to 200 mm. The width of the shielding layer 14A and the width of the shielding layer 14B may be the same or may not be the same. By the presence of the opaque shielding layers 14A and 14B in the laminated glass 10, an adhesive made of urethane or other resin for holding the peripheral edge portions of the laminated glass 10 to the vehicle body is prevented from deterioration by ultraviolet irradiation; and the adhesive is made invisible from outside the vehicle to obtain good appearance.

The shielding layers 14A and 14B can be formed by, for example, applying a ceramic color paste containing a black pigment-containing meltable glass frit to the glass plates by screen printing etc. and firing the applied paste layers. The method for forming the shielding layers 14A and 14B is not limited to this. The shielding layers 14A and 14B may be formed by, for example, applying an organic ink containing a black or dark color pigment to the glass plates by screen printing etc. and drying the applied ink layers.

The shielding layer 14A can be arranged, for example, on a peripheral edge portion of the fourth surface $11_4$ of the first glass plate 11. The shielding layer 14A may be arranged on the peripheral edge portion of the fourth surface $11_4$ of the first glass plate 11 via the coating film 15. The shielding layer 14A may be arranged on the whole or a part of the peripheral edge portion of the fourth surface $11_4$ of the first glass plate 11. In the example of Fig. 2, the shielding layer 14A is arranged only on outer edge portions of the fourth surface $11_4$ along the top edge 11t and the two side edges of the first glass plate 11 in plan view. In other words, in the example of Figs. 2A and 2B, no shielding layer 14A is arranged on an outer edge portion of the fourth surface $11_4$ close to the bottom edge 11b of the first glass plate 11 in plan view.

The shielding layer 14B can be arranged, for example, on a peripheral edge portion of the second surface $12_2$ of the second glass plate 12. The shielding layer 14B may be arranged on a part of the peripheral edge portion of the second surface $12_2$ of the second glass plate 12. The shielding layer 14B may be arranged on the whole or a part of the peripheral edge portion of the second surface $12_2$ of the second glass plate 12. In the example of Figs. 2A and 2B, the shielding layer 14B is arranged on the entire outer peripheral edge portion of the second surface $12_2$ of the second glass plate 12 in plan view. Here, only either one of the shielding layers 14A and 14B may be provided.

The laminated glass 10 may have an information transmission and reception region 16. The information transmission and reception region 16 is provided in an opening portion of the shielding layer 14A and/or 14B of the laminated glass 10. More specifically, when the laminated glass 10 has only the shielding layer 14A, the information transmission and reception region 16 is provided in an opening portion of the shielding layer 14A. When the laminated glass 10 has only the shielding layer 14B, the information transmission and reception region 16 is provided in an opening portion of the shielding layer 14B. When the laminated glass 10 has both of the shielding layer 14A and the shielding layer 14B, the information transmission and reception region 16 is provided in an overlap area between opening portions of the shielding layers 14A and 14B.

The information transmission and reception region 16 is positioned, for example, in a top-edge-side peripheral edge part of the laminated glass 10. The information transmission and reception region 16 is a region through which an information device handling visible light, such as a visible light camera or illuminance sensor, or an information device handling infrared light, such as a LiDAR (Light Detection And Ranging) system, transmits and/or receives information. In other words, when the laminated glass 10 is installed in the vehicle, an information device can be arranged in the vehicle interior side of the information transmission and reception region 16.

A HUD display region R for head-up display is defined on a part of the laminated glass 10. The HUD display region R is a region to which p-polarized light can be emitted from the first glass plate 11 side. The location of the HUD display region R is not limited to one. The HUD display region R may be defined on the laminated glass 10 dividedly at a plurality of locations in the vertical direction or the horizontal direction in plan view.

The HUD display region R displays information by reflection of images projected from inside the vehicle. The HUD display region R corresponds to, in an eyebox specified in SAE J1757-2 (2018), a range where light from the light source 50 is emitted to the laminated glass 10 when the HUD image display position is moved. For example, the HUD display region R is positioned close to the bottom edge 11b of the fourth surface $11_4$ of the first glass plate 11.

In the HUD display region R and its neighboring region, the coating film 15 is located on the fourth surface $11_4$ of the first glass plate 11. It suffices that the coating film 15 is arranged to include the entire HUD display region R. The coating film 15 may be arranged over the entire laminated glass 10. In the example of Figs. 2A and 2B, the coating film 15 is arranged over the entire laminated glass 10. The arrangement of the coating film 15 over the entire laminated glass 10 is favorable in that the boundary between the region where the coating film 15 is arranged and its surrounding region is made invisible.

The coating film 15 is a film that reflects p-polarized visible light from the concave mirror 90 toward the vehicle interior side, and is applied, for example, to the fourth surface $11_4$ of the first glass plate 11. The coating film 15 is transparent to visible light. The film thickness of the coating film 15 is, for example, from 50 nm to 500 nm. The coating film 15 is configured to show a visible light reflectance Rva of 10% or higher when irradiated with p-polarized visible light at an incident angle of 65 deg. Here, the visible light reflectance Rva is determined according to the method for determination of visible light reflectance as specified in ISO 9050:2003, based on a spectral reflectance measured using p-polarized light as incident light at an incident angle $\theta$ = 65 deg as specified in ISO 9050: 2003.

Examples of the coating film 15 includes: a film having a laminated structure of high and low refractive index film layers; an infrared reflective film such as a film having a laminated structure of a metal film layer of silver etc. and a dielectric film layer; and a Low-e film such as a transparent conductive film of ITO etc. Among others, a film having a laminated structure of high and low refractive index film layers is preferred to maintain high p-polarized light reflectance. In the case of the film having a two-layer structure of high and low refractive index films, for example, the high refractive index film and the low refractive index film are laminated in this order on the fourth surface $11_4$ of the first glass plate 11. In the case of the film having a three- or more-layer structure of high and low refractive index films, the high refractive index films and the low refractive index films are laminated alternately in arbitrary order on the fourth surface $11_4$ of the first glass plate 11.

The refractive index of the high refractive index film at a wavelength of 550 nm is typically 1.8 or higher, 1.9 or higher, 2.0 or higher, or 2.1 or higher, and is preferably 2.5 or lower. The refractive index of the low refractive index film at a wavelength of 550 nm is typically lower than 1.8, 1.7 or lower, or 1.6 or lower, and is preferably 1.2 or higher.

More specifically, the high refractive index film preferably contains at least one selected from the following: an oxide of Zr, Nb or Sn; a mixed oxide containing at least two of Ti, Zr, Nb, Si, Sb, Sn, Zn and In; a nitride of Si or Zr; and a mixed nitride of Si and Zr. Further, the low refractive index film preferably contains at least one of silicon oxide, silicon oxynitride, silicon oxycarbide or a mixed oxide. Examples of the mixed oxide include a mixed oxide of silicon and aluminum and a mixed oxide of silicon and zirconium.

The first layer of high refractive index film is optionally composed of one or more sublayers. The thickness (geometric film thickness) of the first layer of high refractive index film is preferably from 50 nm to 100 nm, particularly preferably from 60 nm to 80 nm. The first layer of low refractive index film is optionally composed of one or more sublayers. The thickness (geometric film thickness) of the first layer of low refractive index film is preferably from 70 nm to 160 nm, particularly preferably from 100 nm to 140 nm.

In general, in a HUD system using a coating film 15, a light source or an optical system is arranged such that the incident angle of p-polarized light on the coating film 15 is set to approximately 57 deg. In the HUD system using the coating film 15, however, the space for arrangement of the light source or optical system is limited so that the incident angle $\theta$ may deviate from 57 deg.

In the HUD system 1, the incident angle $\theta$ tends to increase as the location of the HUD display region R becomes closer to the bottom edge of the laminated glass 10. When the incident angle $\theta$ becomes e.g. 67 deg or 72 deg, the amount of light passing through the coating film 15 increases so that, without any countermeasure, the amount of light reflected by a surface of the laminated glass 10, closer to the outside of the vehicle than the coating film 15, increases. As a consequence, the virtual image may appear to be separated under emission of p-polarized visible light onto the laminated glass 10. This separated image is called a ghost image. The occurrence of a ghost image causes deterioration in visibility of the HUD image.

Hence, in the HUD display region R, the interlayer film 13 has a wedge-shaped cross-section region whose thickness gradually increases from the bottom edge to the top edge of the fourth surface $11_4$ of the first glass plate 11 in the state where the laminated glass 10 is installed in the vehicle. By emitting p-polarized light to the wedge-shaped cross-section region of the interlayer film 13, the distance between the primary image and the ghost image can be reduced such that the primary image and the ghost image almost overlap each other to make the ghost image inconspicuous even when the incident angle $\theta$ deviates from 57 deg.

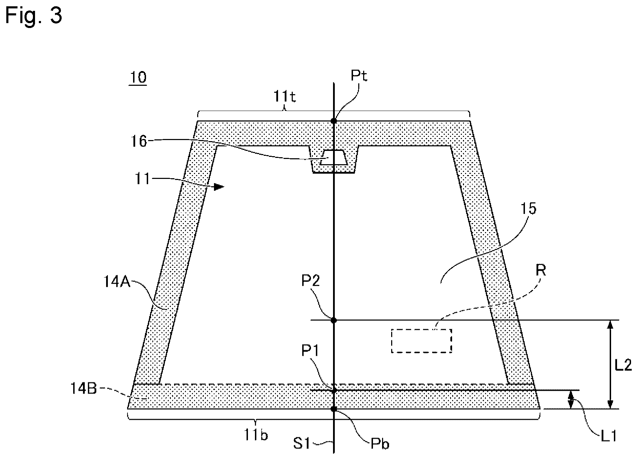

As shown in Fig. 3, in plan view of the laminated glass 10, an imaginary line passing through a first point Pt that bisects the top edge 11t of the fourth surface $11_4$ of the first glass plate 11 and a second point Pb that bisects the bottom edge 11b of the fourth surface $11_4$ of the first glass plate 11 is defined as a straight line S1. Further, a point P1 shown in Fig. 3 indicates a position located at a distance L1 of 100 mm away from the second point Pb as measured on the straight line S1 along the fourth surface $11_4$ of the first glass plate 11. A point P2 shown in Fig. 3 indicates a position located at a distance L2 of 500 mm from the second point Pb as measured on the straight line S1 along the fourth surface $11_4$ of the first glass plate 11.

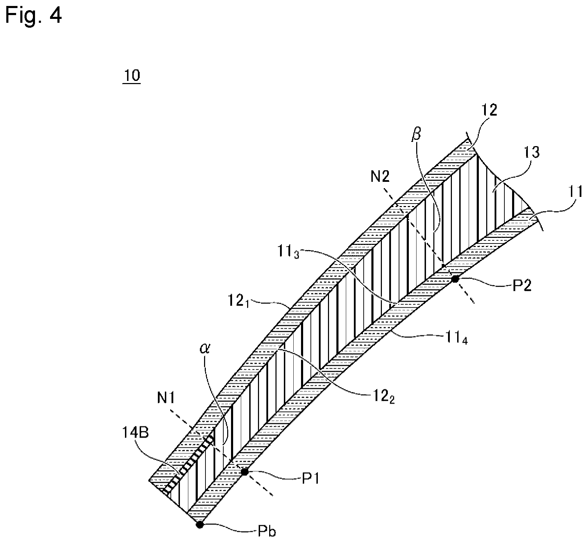

Fig. 4 is a partial cross-sectional view as taken along the straight line S1 of Fig. 3. In Fig. 4, symbol N1 denotes a line normal to the fourth surface $11_4$ of the first glass plate 11 and passing through the point P1; and symbol N2 denotes a line normal to the fourth surface $11_4$ of the first glass plate 11 and passing through the point P2. As shown in Fig. 4, a local wedge angle $\beta$ at the point P2 located 500 mm away from the second point Pb is set larger than a local wedge angle $\alpha$ at the point P1 located 100 mm away from the second point Pb.

Here, a local wedge angle at a certain point P is given by dividing a thickness change of the interlayer film 13 within the range of $\pm 40$ mm from the point P on the straight line S1 by a distance between the boundary points of the above range, that is, 80 mm. Further, a thickness of the interlayer film 13 at a certain point P is measured along a line normal to the fourth surface $11_4$ of the first glass plate 11 and passing through the point P.

In other words, the local wedge angle $\alpha$ at the point P1 is given as follows: $\alpha$ = ((Thickness of Interlayer Film 13 at 100 mm + 40 mm) - (Thickness of Interlayer Film 13 at 100 mm - 40 mm)) / 80 mm. The local wedge angle $\beta$ at the point P2 is given as follows: $\beta$ = ((Thickness of Interlayer Film 13 at 500 mm + 40 mm) - (Thickness of Interlayer Film 13 at 500 mm - 40 mm)) / 80 mm.

The conspicuousness of the secondary image varies depending on the projection distance of the HUD image. The projection distance of the HUD image is preferably 2 m or longer, more preferably 3 m or longer, still more preferably 5 m or longer, particularly preferably 10 m or longer. Here, the projection distance of a HUD image refers to a distance from the center of an eyebox specified in SAE J1757-2 (2018) to the focal position of a virtual image V. As the projection distance of the HUD image becomes longer, the secondary image is darkened and the amount of separation of the secondary image from the primary image is suppressed. This makes the secondary image less conspicuous. Further, as the projection distance of the HUD image becomes longer, the HUD image gets closer to the focal point of the driver during driving. This leads to improved visibility of the HUD image.

The first glass plate 11, the second glass plate 12 and the interlayer film 13 will be now described in more detail below.

[Glass Plates]

The first glass plate 11 and the second glass plate 12 can be made of inorganic glass or organic glass. Examples of the inorganic glass include, but are not particularly limited to, soda-lime glass, aluminosilicate glass, borosilicate glass, alkali-free glass and quartz glass. In terms of scratch resistance, the second glass plate 12 to be located on the vehicle exterior side of the laminated glass 10 is preferably made of inorganic glass. Soda-lime glass is preferred in terms of formability. In the case where the first glass plate 11 and the second glass plate 12 are made of soda-lime glass, clear glass, green glass containing a predetermined amount or more of iron component, or dark green glass is suitably usable. Ultraviolet- or infrared-absorbing glass is also usable. Although a transparent glass plate is preferred, a glass plate colored to a degree that does not impair its transparency may be used.

The inorganic glass can be non-strengthened glass or strengthened glass. The non-strengthened glass refers to glass obtained by forming molten glass into a flat plate shape and annealing the formed glass. The strengthened glass refers to glass obtained by forming a compressive stress layer in a surface of non-strengthened glass. The strengthened glass can be reduced in residual stress by isotropic distribution of stress.

The strengthened glass can be, for example, physically strengthened glass such as air-cooled tempered glass, or chemically strengthened glass. Physically strengthened glass has a surface strengthened by forming a compressive stress layer in the glass surface due to a temperature difference between the glass surface and the glass inside through an operation other than annealing, such as e.g. rapid cooling of uniformly heated plate glass from a temperature close to its softening point during bending.

The chemically strengthened glass has a surface strengthened by forming a compressive stress layer in the glass surface through e.g. ion exchange treatment or the like after bending.

Examples of the material of the organic glass include transparent resins such as a polycarbonate, an acrylic resin e.g. polymethyl methacrylate, a polyvinyl chloride and a polystyrene.

The first glass plate 11 and the second glass plate 12 are not limited to a trapezoidal or rectangular shape and can be formed in various shapes and curvatures. For bending of the first glass plate 11 and the second glass plate 12, a gravity forming method, a press forming method, a roller forming method or the like may be used. The method for forming the first glass plate 11 and the second glass plate 12 is not particularly limited. For example, glass plates formed from inorganic glass by a float method are preferably usable.

The plate thickness of the second glass plate 12 at the thinnest part is preferably from 1.1 mm to 3 mm. When the plate thickness of the second glass plate 12 is 1.1 mm or larger, sufficient strength such as flying stone impact resistance can be obtained. When the plate thickness of the second glass plate 12 is 3 mm or smaller, the mass of the laminated glass 10 does not become excessively large, which is favorable in terms of vehicle fuel efficiency. The plate thickness of the second glass plate 12 at the thinnest part is more preferably from 1.8 mm to 2.8 mm, still more preferably from 1.8 mm to 2.6 mm, yet more preferably from 1.8 mm to 2.2 mm, still yet more preferably from 1.8 mm to 2.1 mm.

The plate thickness of the first glass plate 11 is preferably from 0.3 mm to 2.3 mm. When the plate thickness of the first glass plate 11 is 0.3 mm or larger, good ease of handling can be achieved. When the plate thickness of the first glass plate 11 is 2.3 mm or smaller, the mass of the laminated glass does not become excessively large.

In the case where the plate thickness of the first glass plate 11 is not adequate, the production of laminated glass using two deeply curved glass plates as the first and second glass plates 11 and 12 causes a mismatch between the shapes of these two glass plates to largely affect glass quality e.g. residual stress after press bonding.

However, the glass quality e.g. residual stress can be maintained when the plate thickness of the first glass plate 11 is from 0.3 mm to 2.3 mm. It is particularly effective to set the plate thickness of the first glass plate 11 to be from 0.3 mm to 2.3 mm for maintaining the glass quality of the deeply curved glass. The plate thickness of the first glass plate 11 is more preferably from 0.5 mm to 2.2 mm, still more preferably from 0.7 mm to 2.1 mm. When the plate thickness of the first glass plate 11 is in this range, the above effects are more pronounced.

A coating film having a water-repellent function or an ultraviolet- or infrared-cutting function, or a coating film having low reflective characteristics or low emissive characteristics, may be provided on the outer side of the first glass plate 11 and/or the second glass plate 12. Further, a coating having an ultraviolet- or infrared-cutting function, low emissive characteristics, visible light absorption function, coloring etc. may be provided on the side of the first glass plate 11 and/or the second glass plate 12 in contact with the interlayer film 13.

In the case where the first glass plate 11 and the second glass plate 12 are curved glass plates of inorganic glass, the first glass plate 11 and the second glass plate 12 are bent into a curved shape after the formation of the glass plates by a float method or other method and before the bonding of the glass plates via the interlayer film 13. The bending is performed by heating and softening the glass plate. The heating temperature of the glass plate during the bending should be controlled to within the range of approximately 550°C to 700°C.

[Interlayer Film]

As the material of the interlayer film 13, a thermoplastic resin is often used. Examples of the thermoplastic resin include thermoplastic resins conventionally used for this kind of application, such as plasticized polyvinyl acetal resins, plasticized polyvinyl chloride resins, saturated polyester resins, plasticized saturated polyester resins, polyurethane resins, plasticized polyurethane resins, ethylene-vinyl acetate copolymer resins, ethylene-ethyl acrylate copolymer resins, cycloolefin polymer resins and ionomer resins. Resin compositions containing modified block copolymer hydrogenation products as disclosed in Japanese Patent No. 6065221 may also be suitably used.

Among others, plasticized polyvinyl acetal resins are suitably used in terms of good balance of various properties such as transparency, weather resistance, strength, adhesion, penetration resistance, impact energy absorption, moisture resistance, heat insulation and sound insulation. These plasticized polyvinyl acetal resins can be used alone or in a combination of two or more thereof. The term "plasticized" as in the plasticized polyvinyl acetal resins means being plasticized with the addition of a plasticizer. The same applies to other plasticized resins.

In the case where a certain item is enclosed in the interlayer film 13, however, the interlayer film 13 may be deteriorated by a specific plasticizer depending on the type of the item enclosed. In this case, it is preferable that the resin used is substantially free of such a specific plasticizer. As the resin free of such a specific plasticizer, an ethylene-vinyl acetate (EVA) copolymer resin may be mentioned.

Examples of the polyvinyl acetal resins include: a polyvinyl formal resin obtained by reaction of a polyvinyl alcohol (PVA) with formaldehyde; a polyvinyl acetal resin in a narrow sense, obtained by reaction of PVA with acetaldehyde; and a polyvinyl butyral (PVB) resin obtained by reaction of PVA with n-butyraldehyde. PVB is particularly suitable in terms of good balance of various properties such as transparency, weather resistance, strength, adhesion, penetration resistance, impact energy absorption, moisture resistance, heat insulation and sound insulation. These polyvinyl acetal resins can be used alone or in a combination of two or more thereof.

The material of the interlayer film 13 is however not limited to the above thermoplastic resin. Further, the interlayer film 13 may contain functional particles such as an infrared absorber, an ultraviolet absorber, a luminescent agent or the like. The interlayer film 13 may have a colored portion called a shade band. A color pigment for forming the colored portion can be any of those usable for plastics, and the amount of the color pigment added should be adjusted such that the visible light transmittance of the colored portion becomes 40% or lower. Examples of the color pigment include: organic color pigments such as azo type, phthalocyanine type, quinacridone type, perylene type, perinone type, dioxazine type, anthraquinone type and isoindolinone type; and inorganic pigments such as an oxide, a hydroxide, a sulfide, a chromate, a sulfate, a carbonate, a silicate, a phosphate, an arsenate, a ferrocyanate, carbon and a metal powder. These color pigments can be used alone or in combination of two or more thereof.

The interlayer film 13 may have a plurality of layers. For example, the interlayer film 13 may have three or more layers.

The film thickness of the interlayer film 13 at the thinnest part is preferably 0.5 mm or larger. In the case where the interlayer film 13 has a plurality of layers, the film thickness of the interlayer film 13 refers to the total thickness of the respective layers. When the film thickness of the interlayer film 13 at the thinnest part is 0.5 mm or larger, sufficient impact resistance required for the laminated glass can be ensured. Further, the film thickness of the interlayer film 13 at the thickest part is preferably 3 mm or smaller. When the maximum value of the film thickness of the interlayer film 13 is 3 mm or smaller, the mass of the laminated glass does not become excessively large. The maximum value of the film thickness of the interlayer film 13 is more preferably 2.8 mm or smaller, still more preferably 2.6 mm or smaller.

In the case where the interlayer film 13 has a plurality of layers, the respective layers in the interlayer film 13 are preferably made of the same material, but may be made of different materials. In view of the adhesion between the first glass plate 11 and the second glass plate 12, the functional material enclosed in the laminated glass 10 and the like, it is preferable to use the above material for a part of the interlayer film 13 occupying at least 50% of its film thickness.

To form the interlayer film 13, for example, the above resin material is appropriately selected as an interlayer film material and extruded in a heated and molten state with the use of an extruder. The extrusion conditions such as extrusion speed of the extruder are set to perform uniform extrusion. The extruded resin film is subjected to e.g. stretching as needed to give a curvature to the top and bottom edges of the resin film in accordance with the design of the laminated glass. With this, the interlayer film 13 is completed.

[Laminated Glass]

The total thickness of the laminated glass 10 is preferably from 2.8 mm to 10 mm. When the total thickness of the laminated glass 10 is 2.8 mm or larger, sufficient rigidity can be ensured. When the total thickness of the laminated glass 10 is 10 mm or smaller, sufficient transmittance and reduced haze can be obtained. The total thickness of the laminated glass 10 is more preferably 7 mm or smaller, still more preferably 6 mm or smaller, yet more preferably 5 mm or smaller.

On at least one side of the laminated glass 10, the amount of misalignment between the first glass plate 11 and the second glass plate 12 is preferably 1.5 mm or less, more preferably 1 mm or less. Here, the amount of misalignment between the first glass plate 11 and the second glass plate 12 refers to the amount of misalignment between the outer periphery of the first glass plate 11 and the outer periphery of the second glass plate 12 in plan view.

It is preferable to set the amount of misalignment between the first and second glass plates 11 and 12 on at least one side of the laminated glass 10 to be 1.5 mm or less in that the appearance of the laminated glass is not impaired. It is more preferable to set the amount of misalignment between the first and second glass plates 11 and 12 on at least one side of the laminated glass 10 to be 1.0 mm or less in that the appearance of the laminated glass is not impaired.

[Method for Producing Laminated Glass]

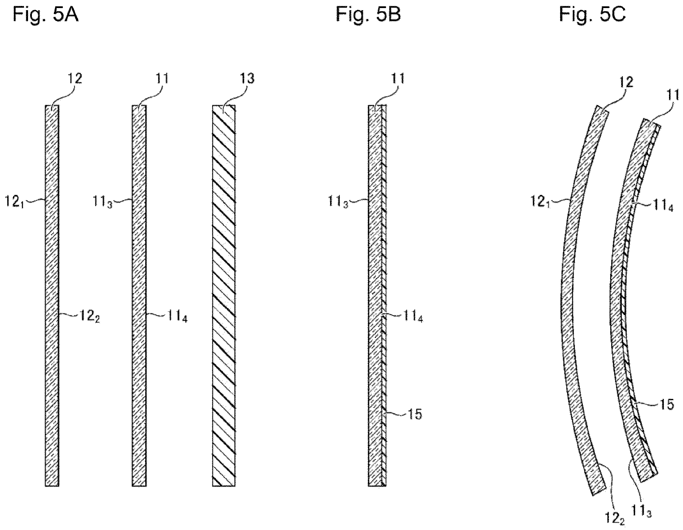

For production of the laminated glass 10, the first glass plate 11 with the third and fourth surfaces $11_3$ and $11_4$, the interlayer film 13 and the second glass plate 12 with the first and second surfaces $12_1$ and $12_2$ are first provided as shown in Fig. 5A. The first glass plate 11 and the second glass plate 12 are uniform in plate thickness. Here, the interlayer film 13 is assumed to be uniform in film thickness. The interlayer film 13 may be provided with a wedge-shaped cross section.

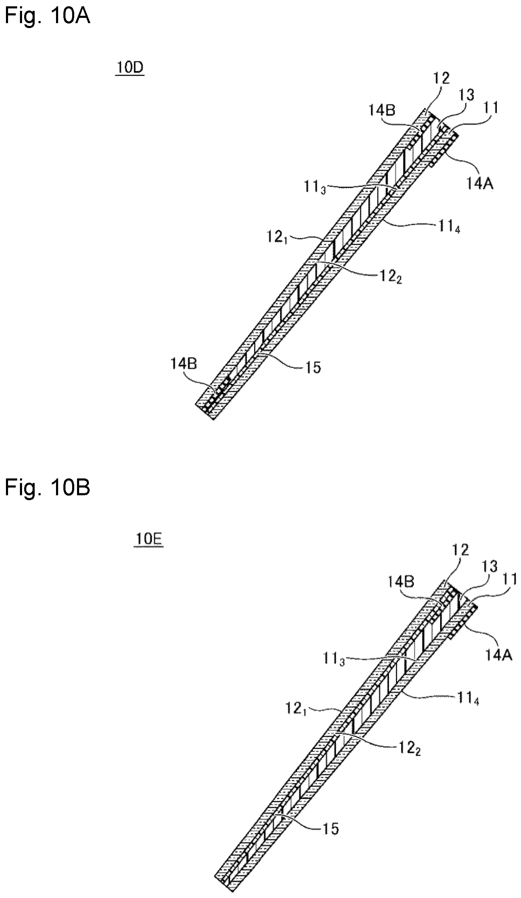

Next, the coating film 15, which shows a visible light reflectance of 10% or higher when irradiated with p-polarized visible light at an incident angle of 65 deg, is formed on the fourth surface $11_4$ of the first glass plate 11 as shown in Fig. 5B. The coating film 15 can be formed on the fourth surface $11_4$ of the first glass plate 11 by e.g. a sputtering method, a CVD method or the like. Although the coating film 15 is formed on the entire fourth surface $11_4$ of the first glass plate 11 in the example of Fig. 5B, the coating film 15 may be formed on a part of the fourth surface $11_4$ of the first glass plate 11. Although the coating film 15 is formed on the fourth surface $11_4$ of the first glass plate 11 in the example of Fig. 5B, the coating film 15 may be formed on the third surface $11_3$ of the first glass plate 11 or the second surface $12_2$ of the second glass plate 12 as in the later-described example of Figs. 10A and 10B. The first glass plate 11 with the coating film 15 may be prepared by forming the coating film 15 on large-sized plate glass and cutting the resulting coated plate glass.

After the formation of the coating film 15, the first glass plate 11 and the second glass plate 12 are subjected to bending as shown in Fig. 5C. The bending of the first glass plate 11 and the second glass plate 12 can be performed by e.g. a press forming method. More specifically, convex and concave molds are provided according to the final shape of the laminated glass 10; and the first and second glass plates 11 and 12 are heated and softened at respective predetermined temperatures, and then, bent with by press-forming with the use of the above molds. A gravity forming method, a roller forming method or the like may alternatively be used for the bending of the first glass plate A and the second glass plate B.

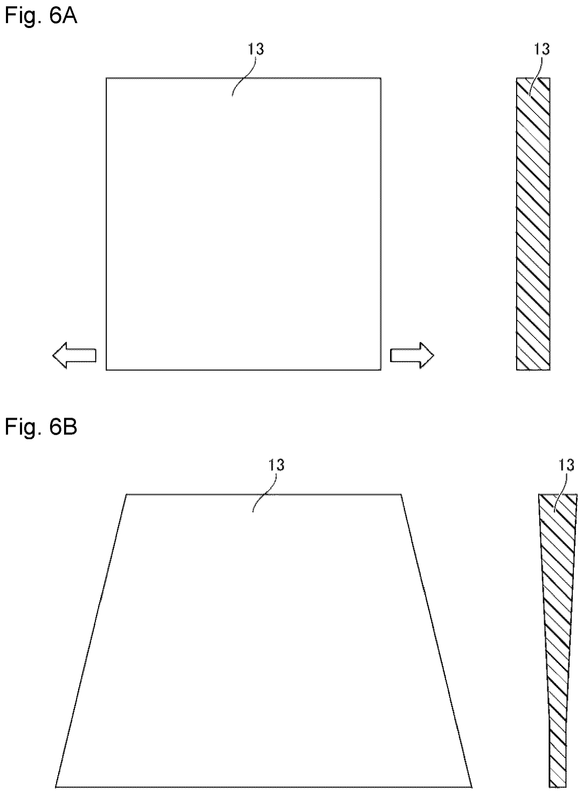

As shown in Fig. 6A, in plan view, one of two opposite edges and its vicinity of the interlayer film 13 are stretched in the directions of arrows along the one edge. The stretching direction is not limited to this. For example, the whole of the one edge and its vicinity may be stretched in the horizontal direction while varying the degree of stretching in the vertical direction. The stretching can be performed, for example, using a stretching machine. When the one edge and its vicinity of the rectangular-planar-shaped interlayer film 13 are stretched in the directions of arrows, the interlayer film 13 is formed into a trapezoidal planar shape, with the stretched edge and its vicinity being wedge-shaped in cross section, as shown in Fig. 6B. Here, there is an upper limit on the degree of stretching of the one edge and its vicinity. When the degree of stretching reaches saturation as a result of strong stretching of the interlayer film 13, thickness variations disappear, and the one edge and its vicinity become thinner with no or almost no wedge angle formed. On the other hand, a wedge angle is formed on a portion of the interlayer film other than the vicinity of the one edge. There thus arises a difference in wedge angle between the vicinity of the one edge and the other portion. In other words, the interlayer film 13 with local wedge angles $\alpha$ and $\beta$ as shown in Fig. 4 is obtained.

In the above step, the interlayer film 13 is shaped to have a wedge-shaped cross-section region whose thickness gradually increases from the bottom edge 11b to the top edge 11t of the fourth surface $11_4$, as shown in Figs. 3 and 4, in the state where the laminated glass 10 is installed in the vehicle. The stretching is performed such that, assuming in plan view a straight line S1 passing through the first point Pt that bisects the top edge 11t and the second point Pb that bisects the bottom edge 11b, the formula $(\beta - \alpha) > 0.05$ [mrad] is satisfied between the local wedge angle $\alpha$ at a position 100 mm away from the second point Pb on the straight line and the local wedge angle $\beta$ at a position 500 mm away from the second point Pb on the straight line. The same procedure can be followed in the case where the interlayer film 13 with a wedge-shaped cross section, not uniform in thickness, is prepared.

In the case where the interlayer film 13 has a plurality of layers, a laminate of the plurality of layers is formed, and then, the stretching is performed throughout the laminate.

In each of Figs. 6A and 6B, shown without hatching on the left side is a plan view; and shown with hatching on the right side is a cross-sectional view. In the cross-sectional views on the right sides of Figs. 6A and 6B, the interlayer film 13 is illustrated more exaggeratedly in the thickness direction than in the cross-sectional view of Fig. 5A. The step shown in Figs. 6A and 6B and the steps shown in Figs. 5B and 5C may be carried out sequentially in any order or may be carried out in parallel to one another.

Then, the third surface $11_3$ of the first glass plate 11 and the second surface $12_2$ of the second glass plate 12 are press-bonded with the stretched interlayer film 13 sandwiched therebetween. For example, the interlayer film 13 is stacked between the first glass plate 11 and the second glass plate 12 such that the coating film 15 is situated on the outer side. The stacked films are placed in e.g. a rubber bag, a rubber chamber or a resin bag etc. and bonded together under vacuum at a gauge pressure controlled within the range of 100 kPa to -65 kPa and a temperature controlled within the range of 70°C to 110°C. The heating conditions, the temperature conditions and the stacking method are selected as appropriate.

By performing press-bonding treatment under controlled conditions of, for example, a temperature of 100°C to 150°C and an absolute pressure of 0.6 MPa to 1.5 MPa, the laminated glass 10 can be obtained with higher durability. In some cases, however, such heating and pressing may not be used in view of the process simplification or the properties of the materials enclosed in the laminated glass 10. By the above process steps, the laminated glass 10 is completed.

Furthermore, a so-called cold bending method may be used in which the second glass plate 12 is bent in advance and the flat first glass plate is bent along and bonded to the second glass plate 12 with the interlayer film 13 sandwiched therebetween.

In addition to the interlayer film 13, a film or device having the function of a heating wire, infrared reflection, luminescence, power generation, dimming, a touch panel, visible light reflection, scattering, decoration, absorption or the like may be arranged between the first glass plate 11 and the second glass plate 12 within the range that does not impair the effects of the present invention. Furthermore, a film having the function of anti-fogging, water repellency, heat insulation, low reflection or the like may be provided on the surface of the laminated glass 10. A film having the function of heat insulation, heat generation or the like may be provided on the inner main surface of the first glass plate 11 or the inner main surface of the second glass plate 12.

In the laminated glass 10, the coating film 15 is provided on the first glass plate 11 and is not provided on the second glass plate 12 as described above. In such a case, the first glass plate 11 and the second glass plate 12 differ in bending behavior during bending of the first and second glass plates 11 and 12 in the process of producing the laminated glass 10. This may cause a mismatch after the bending. Here, the mismatch refers to a state where the peripheral portions of the glass plates do not match in shape.

The mismatch can become a cause for the occurrence of foaming in the interlayer film 13. Especially when the curvature of the peripheral portion of the first glass plate 11 to be used as the vehicle-interior-side glass plate is greater than the curvature of the peripheral portion of the second glass plate 12 to be used as the vehicle-exterior-side glass plate, a gap called an opening is created between the bottom edge side of the third surface $11_3$ of the first glass plate 11 and the interlayer film 13. This readily leads to the occurrence of foaming in the interlayer film 13 after the releasing of the vehicle to the market. The occurrence of foaming in the interlayer film 13 is particularly prominent in the vicinity of the bottom edge of the laminated glass in which the interlayer film has a wedge-shaped cross section.

The laminated glass 10 is hence designed such that the local wedge angle $\alpha$ and the local wedge angle $\beta$ meet the formula $(\beta - \alpha) > 0.05$ [mrad] as a countermeasure to suppress the occurrence of foaming in the interlayer film 13. In other words, the local wedge angle $\alpha$ of the interlayer film 13 in the vicinity of the bottom edge 11b of the fourth surface $11_4$ of the first glass plate 11 is set smaller. This allows the first glass plate 11 and the second glass plate 12 to be press-bonded in a nearly parallel orientation with the interlayer film 13 sandwiched between the first glass plate 11 and the second glass plate 12. It is consequently possible to, even when the laminated glass is placed in a harsh environment such as high-temperature environment for a long time, reduce the possibility of a gap created between the bottom edge or its vicinity of the third surface $11_3$ of the first glass plate 11 and the interlayer film 13 whereby foaming becomes less likely to occur in the interlayer film 13. The value of $(\beta - \alpha)$ is preferably 0.30.

The laminated glass 10 is preferably configured to satisfy the formula: $\alpha < 0.35$ [mrad], and is more preferably configured to satisfy the formula: $\alpha < 0.10$ [mrad]. As the local wedge angle $\alpha$ becomes smaller, the first glass plate 11 and the second glass plate 12 are press-bonded in a more parallel orientation at and in the vicinity of the bottom edge 11b so that foaming becomes further less likely to occur in the interlayer film 13. Further, it is preferable to satisfy the formula $(\alpha + 0.05$ [mrad]$) < \beta < 0.30$ [mrad]. When the wedge angle $\beta$ is in this range, it is sufficient to reduce the ghost image; and, by not setting the wedge angle $\beta$ larger than necessary, it is possible to contribute to the reduction of a mismatch between the first glass plate and the second glass plate.

Further, the average film thickness of the interlayer film 13 within the range of 70 mm to 130 mm from the lower edge 11b on the straight line S1 shown in Fig. 3 may be 0.80 mm or smaller or may be 0.70 mm or smaller. The smaller the thickness of the interlayer film 13, the more likely foaming is to occur in the interlayer film 13. However, the laminated glass 10 is configured to satisfy the formula $(\beta - \alpha) > 0.05$ [mrad] whereby foaming is less likely to occur in the interlayer film 13 even when the interlayer film is small in thickness.

For example, the total iron content of the first glass plate 11 in terms of the weight percentage of $Fe_2O_3$ may be lower than that of the second glass plate 12. The total iron content of the second glass plate 12 in terms of the weight percentage of $Fe_2O_3$ may be 0.1% or more. For example, the first glass plate 11 may be made of clear glass; and the second glass plate 12 may be made of green glass. In the case where the first glass plate 11 and the second glass plate 12 have different compositions as mentioned above, foaming is likely to occur in the interlayer film 13 due to a difference in behavior during bending of the glass plates. As a countermeasure against such foaming, it is effective to satisfy the formula $(\beta - \alpha) > 0.05$ [mrad].

In the case where, in plan view, the shielding layer 14B is provided on the outer edge portion of the second surface $12_2$ of the second glass plate 12 at and in the vicinity of the bottom edge and no shielding layer is provided on the outer edge portion of the fourth surface $11_4$ of the first glass plate 11 at and in the vicinity of the bottom edge 11b as in the example of Figs. 2A and 2B, the first and second glass plates largely differ in behavior during bending so that foaming is likely to occur in the interlayer film 13. It is effective to satisfy the formula $(\beta - \alpha) > 0.05$ [mrad] as a countermeasure against such foaming.

In the laminated glass 10, the difference in plate thickness between the first glass plate 11 and the second glass plate 12 is preferably 0.3 mm or smaller, more preferably smaller than 0.2 mm. As the difference in plate thickness between the first glass plate 11 and the second glass plate 12 becomes smaller, the difference in bending behavior of the glass plates is more reduced whereby foaming becomes less likely to occur in the interlayer film 13.

<Modifications>

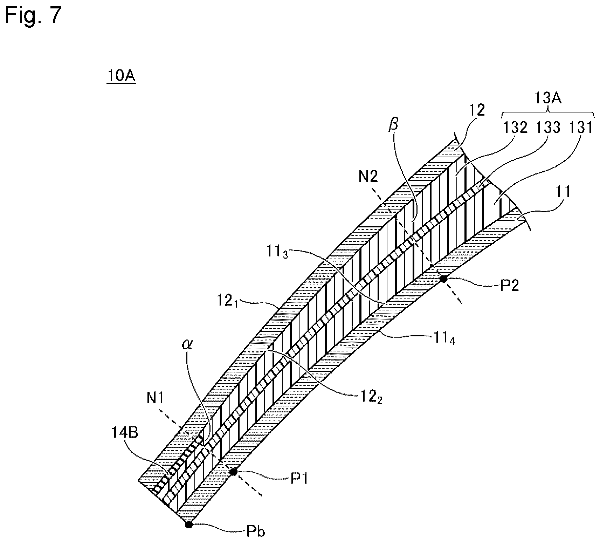

Fig. 7 is a cross-sectional view of part of laminated glass according to Modification 1 of the first embodiment, which shows a cross section corresponding to that of Fig. 4.

Laminated glass 10A shown in Fig. 7 is different from the laminated glass 10 in that an interlayer film 13A is used in place of the interlayer film 13. The interlayer film 13A has a three-layer structure. More specifically, the interlayer film 13A includes an interlayer 131 bonded to the first glass plate 11, an interlayer 132 bonded to the second glass plate 12 and an interlayer 133 held between the interlayer 131 and the interlayer 132.

For example, the interlayer 133 serves as a core layer and has a shear storage modulus lower than those of the interlayers 131 and 132. The interlayers 131 and 132 serve as skin layers and have a shear storage modulus higher than that of the interlayer 133. The shear storage modulus of the interlayer 131 and the share storage modulus of the interlayer 132 can be the same or different. The shear storage modulus can be varied by adjusting the amount of the plasticizer added to the resin and the like. In the present invention, the shear storage modulus refers to a value measured by a common dynamic viscoelastic measurement method under measurement conditions of a temperature of 20°C, a frequency of 1 Hz and a strain of 0.05%

The thickness of the interlayer 133 is preferably from 0.05 mm to 0.3 mm, more preferably from 0.07 mm to 0.2 mm. The thickness of the interlayers 131 and 132 is preferably from 0.1 mm to 2.0 mm, more preferably from 0.1 mm to 1.0 mm. The thickness of the interlayer 133 may be smaller than the thickness of the interlayers 131 and 132.

The laminated glass 10A can achieve improved sound insulation by sandwiching the core layer of low shear storage modulus between the skin layers of high shear storage modulus as mentioned above. In the case where the interlayer film has a four- or more-layer structure in which any of the interlayers other than both the outermost interlayers has a lower shear storage modulus than those of both the outermost interlayers, the sound insulation of the laminated glass 10A can be also improved in the same manner as above.

In the case where a soft layer of low shear storage modulus is included as in the interlayer film 13A, foaming is likely to occur at an interface between the layer of low shear storage modulus and the layer of high shear storage modulus.

As a countermeasure against such foaming, it is effective to satisfy the formula $(\beta - \alpha) > 0.05$ [mrad].

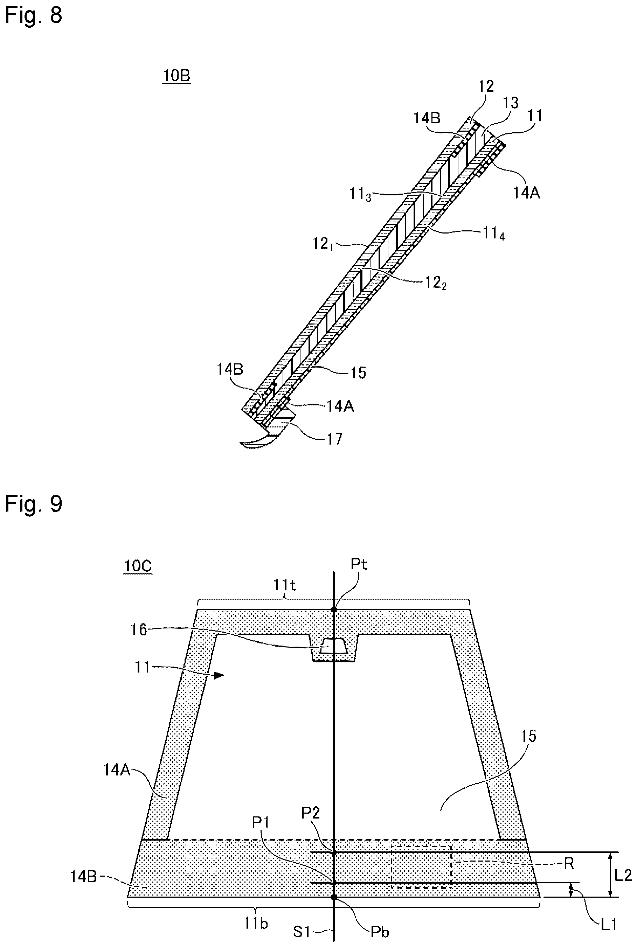

Fig. 8 is a cross-sectional view of part of laminated glass according to Modification 2 of the first embodiment, which shows a cross section corresponding to that of Fig. 2B.

Laminated glass 10B shown in Fig. 8 is different from the laminated glass 10 in that a molding 17 is arranged on an outer edge portion of the fourth surface $11_4$ of the first glass plate 11. The shielding layer 14A is provided on the bottom edge and its vicinity of the fourth surface $11_4$ of the first glass plate 11, and the molding 17 is fixed to the vehicle interior side of the shielding layer 14A. The molding 17 can be fixed to the shielding layer 14A by, for example, applying an extruded resin member to the shielding layer 14A on the first glass plate 11. Since the molding 17 is arranged only on the outer edge portion of the fourth surface $11_4$ of the first glass plate 11, an end portion of the interlayer film 13 is exposed from the molding 17 at and in the vicinity of the bottom edge 11b.

In the case where the laminated glass has a molding arranged to cover an end portion of the interlayer film 13, the end portion of the interlayer film 13 is protected by the molding so that foaming is unlikely to occur in the interlayer film 13. In the laminated glass 10B, by contrast, the end portion of the interlayer film 13 is exposed from the molding 17 and is not protected by the molding 17 so that foaming is likely to occur in the interlayer film 13. As a countermeasure against such foaming, it is effective to satisfy the formula $(\beta - \alpha) > 0.05$ [mrad].

Fig. 9 is a schematic plan view of laminated glass according to Modification 3 of the first embodiment, as viewed from the vehicle interior side toward the vehicle exterior side. In Fig. 9, L1 is 100 mm; and L2 is 500 mm.

Laminated glass 10C shown in Fig. 9 is different from the laminated glass 10 in that the HUD display region R is provided at a position overlapping the shielding layer 14B in plan view. At least the region where the local wedge angles $\alpha$ and $\beta$ are defined overlaps in position with the shielding layer 14B in plan view. More specifically, the shielding layer 14B is provided on the region including the range of 60 mm to 540 mm from the second point Pb on the straight line S1. In place of or in addition to the shielding layer 14B, the shielding layer 14A may be provided on the region including the range of 60 mm to 540 mm from the second point Pb on the straight line S1.

When the HUD display region R is positioned to overlap the shielding layer 14B in plan view, the HUD display region R is less susceptible to external light and is not easily lowered in HUD image contrast so that the visibility of the HUD image is improved. This makes it easy to see foaming if occurring in the interlayer film 13. As a countermeasure against such a problem, it is effective to satisfy the formula $(\beta - \alpha) > 0.05$ [mrad].

Figs. 10A and 10B are cross-sectional views of laminated glass according to Modification 4 of the first embodiment, which show cross sections corresponding to that of Fig. 2B.

In the laminated glass of Figs. 2A and 2B, the coating film 15 is provided on the fourth surface $11_4$ of the first glass plate 11. The laminated glass of the present disclosure is, however, not limited to the example of Figs. 2A and 2B. The coating film 15 may be provided on the third surface $11_3$ of the first glass plate 11 as in laminated glass 10D shown in Fig. 10A. Alternatively, the coating film 15 may be provided on the second surface $12_2$ of the second glass plate 12 as in laminated glass 10E shown in Fig. 10B. In the laminated glass of the present disclosure, the coating film 15 is provided on the second surface $12_2$ of the second glass plate 12, the third surface $11_3$ of the first glass plate 11 or the fourth surface $11_4$ of the first glass plate 11 as described above.

When two types of coating film are provided to the laminated glass, e.g., a coating film on the first glass plate 11 and a coating film on the second glass plate 12 are different types, there may occur a mismatch after bending of the two glass plates. As a countermeasure against such a problem, it is effective to satisfy the formula $(\beta - \alpha) > 0.05$ [mrad].

In the case of the laminated glass 10D, 10E, as in the case of the laminated glass 10, the first glass plate 11 and the second glass plate 12 differ in behavior during bending of the first and second glass plates 11 and 12 in the process of producing the laminated glass 10D, 10E, which may cause a mismatch after the bending. The laminated glass 10D, 10Eh is thus designed such that the local wedge angle $\alpha$ and the local wedge angle $\beta$ meet the formula $(\beta - \alpha) > 0.05$ [mrad], as in the case of the laminated glass 10, whereby foaming becomes less likely to occur in the interlayer film 13.

It is herein preferable that the coating film 15 is provided on the fourth surface $11_4$ of the first glass plate 11, as in the case of the laminated glass 10, because, in this case, a surface of the coating film 15 in contact with the first glass plate 11 serves as a main reflection surface so that the secondary image can be limited to one and made inconspicuous.

<Examples and Comparative Examples>

Now, Examples of the present invention and Comparative Examples will be described below. It should however be understood that the present invention is by no means restricted to these Examples. Here, Ex. 1 and 4 correspond to Examples of the present invention; and Ex. 2, 3, 5 and 6 correspond to Comparative Examples.

[Ex. 1]

As a first glass plate A of flat shape to be used as an inner plate (vehicle-interior-side glass plate) of laminated glass, a clear glass plate (total iron content in terms of $Fe_2O_3$: 0.08%) manufactured by AGC Inc. was provided. As a second glass plate B of flat shape to be used as an outer plate (vehicle-exterior-side glass plate) of laminated glass, a green glass plate (total iron content in terms of $Fe_2O_3$: 0.50%) manufactured by AGC Inc. was provided. Each of the first glass plate A and the second glass plate B had a dimension of 1,560 mm × 966 mm × 1.8 mm thickness. Further, each of the first glass plate A and the second glass plate B was not wedge-shaped in cross section and was uniform in thickness. A sound insulating film of non-wedge shape with a uniform thickness, having a laminated structure of three PVB films, was provided as an interlayer film C. In the interlayer film C, both of the outer PVB films had a thickness of 0.33 mm; and the intermediate PVB film had a thickness of 0.1 mm.

Next, a p-polarized visible light reflective coating film (a laminated film of $TiZrO_2/SiO_2$ with geometric film thickness of 73.9 nm/99.5 nm) was applied to a fourth surface of the first glass plate A to be located on the vehicle interior side.

Provided were convex and concave molds according to the final shape of laminated glass. Each of the first glass plate A and the second glass plate B was heated to and softened at 600°C and bent by press-forming with the use of the molds.

Using a plastic film stretching machine D, one of opposite edges and its vicinity of the interlayer film C were stretched to form a wedge-shaped cross section. The stretching machine D used was of the type disclosed in U.S. Patent No. 2933759. The stretching machine D was configured to stretch the interlayer film C by heating the interlayer film and guiding the interlayer film along an umbrella-shaped cylinder. The degree of stretching was selectable according to the opening degree (radius R) of the umbrella-shaped cylinder. In Ex. 1, the interlayer film C was strongly stretched with the setting of R = 1,800 mm. Since there was an upper limit on the degree of stretching in the vicinity of the one edge, thickness variations disappeared as a result of strong stretching of the interlayer film C, and the vicinity of the one edge became thinner with no or almost no wedge angle formed. On the other hand, a wedge angle was formed on a portion of the interlayer film other than the vicinity of the one edge. There thus arose a difference in wedge angle between the vicinity of the one edge and the other portion.

The stretched interlayer film C was stacked between the curved first glass plate A with the coating film and the curved second glass plate B. The resulting film stack was treated under vacuum at a gauge pressure controlled within the range of 100 kPa to -65 kPa and a temperature controlled within the range of approximately 70°C to 110°C, thereby bonding the first glass plate A and the second glass plate B together by the interlayer film C. The thus-obtained laminate was further subjected to press-bonding by heating and pressing under conditions controlled to a temperature of 100°C to 150°C and an absolute pressure of 0.6 MPa to 1.5 MPa. With this, laminated glass of type A was obtained. Here, the laminated glass of type A was designed for use at a p-polarized light incident angle of 62 degrees and a HUD image projection distance of 6.2 m.

[Ex. 2]

Laminated glass of type A was produced in the same manner as in Ex. 1, except that the interlayer film C (sound insulating film of non-wedge shape) was not stretched at all.

[Ex. 3]

Laminated glass of type A was produced in the same manner as in Ex. 1, except that the interlayer film C (sound insulating film of non-wedge shape) was weakly stretched by setting the stretch machine D to R = 3000 mm. In Ex. 3, as a result of weak stretching of the interlayer film C, a substantially constant wedge angle was formed from one edge to the other edge.

[Ex. 4]

Laminated glass of type B was produced in the same manner as in Ex. 1, except that: a clear glass plate manufactured by AGC Inc. with a dimension of 1580 mm × 811 mm × 1.8 mm thickness was used as the first glass plate A; a green glass plate manufactured by AGC Inc. with a dimension of 1580 mm × 811 mm x 2.0 mm thickness was used as the second glass plate B; a wedge-shaped sound insulating film having a constant wedge shape formed in advance was used as the interlayer film C. Here, the laminated glass of type B was designed for use at a p-polarized light incident angle of 67 degrees and a HUD image projection distance of 2.5 m. In Ex. 4, the interlayer film C was strongly stretched to form additional wedge angles in addition to the original wedge angle before the stretching. More additional wedge angles were formed in a portion of the interlayer film other than the vicinity of the one edge than in the vicinity of the one edge.

[Ex. 5]

Laminated glass of type B was produced in the same manner as in Ex. 1, except that: the same glass plates as those used in Ex. 4 were used as the first and second glass plates A and B; the same interlayer film (sound insulating film of non-wedge shape) as that used in Ex. 1 was used as the interlayer film C; and the interlayer film C was not stretched at all.

[Ex. 6]

Laminated glass of type B was produced in the same manner as in Ex. 1, except that: the first glass plate A, the second glass plate B and the interlayer film C (wedge-shaped sound insulating film) used were the same as those used in Ex. 4; and the interlayer film C was weakly stretched by setting the stretch machine D to R = 3000 mm. In Ex. 6, as a result of weak stretching of the interlayer film C, additional wedge angles were formed in addition to the original wedge angle before the stretching. Substantially the same additional wedge angles were formed in the vicinity of the one edge and in the vicinity of the other edge opposite the one edge.

[Ex. 7]

Laminated glass of type B was produced in the same manner as in Ex. 1, except that: the first glass plate A, the second glass plate B and the interlayer film C (wedge-shaped sound insulating film) used were the same as those used in Ex. 4; and the interlayer film C was weakly stretched by setting the stretching machine D to R = 3000 mm. In Ex. 7, as a result of weak stretching of the interlayer film C, additional wedge angles were formed in addition to the original wedge angle before the stretching. Substantially the same additional wedge angles were formed in the vicinity of the one edge and in the vicinity of the other edge opposite the one edge.

[Evaluation 1 (Measurement of Mismatch)]

In each of Ex. 1 to Ex. 7, the second glass plate B was stacked on the first glass plate A after the bending of the first glass plate A and the second glass plate B and before the production of the laminated glass. The maximum value of a gap between the first glass plate A and the second glass plate B was then measured at a position corresponding to, when the laminated glass was completed and installed in a vehicle, the bottom edge of the laminated glass. The measured value was taken as a mismatch.

[Evaluation 2 (Measurement of Local Wedge Angles and Other Parameters)]

Local wedge angles $\alpha$ and $\beta$ were measured according to the method described above. Further, a value of $(\beta - \alpha)$ was calculated. Also measured was an average film thickness of the interlayer film C within the range of 60 mm to 140 mm from the second point on the straight line shown in Fig. 4 in the state where the laminated glass was completed and installed in a vehicle. Here, the film thickness of the interlayer film C was measured with a multilayer film thickness measurement gauge Optigauge manufactured by Lumetrics.

[Evaluation 3 (Measurement of Distance of Ghost Image)]

For the laminated glass of each of Ex. 1 to 7, the distance of a ghost image as defined in Section 4.1.7 of SAE J1757-2 (2018) was measured based on the method specified in this standard. Although this standard recommends measurements from three upper, center and lower viewpoints (UE2, CE2, and LE2), the measurement was herein conducted only from the center viewpoint (CE2). In view of the HUD image visibility, the evaluation was rated as: "Good (indicated by the symbol ○)" when the distance of the ghost image was 1.0 mm or smaller; and "Not Good (indicated by the symbol ✕) when the distance of the ghost image was larger than 1.0 mm.

[Evaluation 4 (Measurement of Foaming Occurrence Temperature)]

The laminated glass of each of Ex. 1 to 7 was tested for the occurrence of foaming in the interlayer film C by, after leaving the laminated glass in an oven set to 100°C for 15 hours, observing the appearance of the laminated glass from a position 30 cm away from the second glass plate B. When no foaming was observed, the laminated glass was further left in an oven set to 110°C for 1 hour and then checked for the occurrence of foaming in the same manner as above. When no foaming was observed, the laminated glass was further left in an oven set to 120°C for 1 hour and then checked for the occurrence of foaming in the same manner as above. When no foaming was observed, the laminated glass was further left in an oven set to 130°C for 1 hour and then checked for the occurrence of foaming in the same manner as above. When no foaming was observed, the laminated glass was further left in an oven set to 140°C for 1 hour and then checked for the occurrence of foaming in the same manner as above. The evaluation was rated as: "Excellent (indicated by the symbol ◎)" when foaming did not occur even at 140°C; "Good (indicated by the symbol ○)" when foaming occurred for the first time at 140°C; and "Not Good (indicated by the symbol ×)" when foaming occurred even a little at 130°C or lower.

[Evaluation 5 (Overall Evaluation)]

The overall evaluation was carried out based on the results of Evaluation 3 (Measurement of Distance of Ghost Image) and Evaluation 4 (Measurement of Foaming Occurrence Temperature). The overall evaluation was rated as "Not Good (indicated by the symbol ×)" when at least one of the results of Evaluation 3 (Measurement of Distance of Ghost Image) and Evaluation 4 (Measurement of Foaming Occurrence Temperature) was "Not Good (indicated by the symbol ×)". When both of the results of Evaluation 3 (Measurement of Distance of Ghost Image) and Evaluation 4 (Measurement of Foaming Occurrence Temperature) were "Good (indicated by the symbol O)", the overall evaluation was evaluated as "Good (indicated by the symbol ○ )". When the result of Evaluation 3 (Measurement of Distance of Ghost Image) was "Good (indicated by the symbol ○)" and the result of Evaluation 4 (Measurement of Foaming Occurrence Temperature) was "Excellent (indicated by the symbol O)", the overall evaluation was rated as "Excellent (indicated by the symbol ◎)".

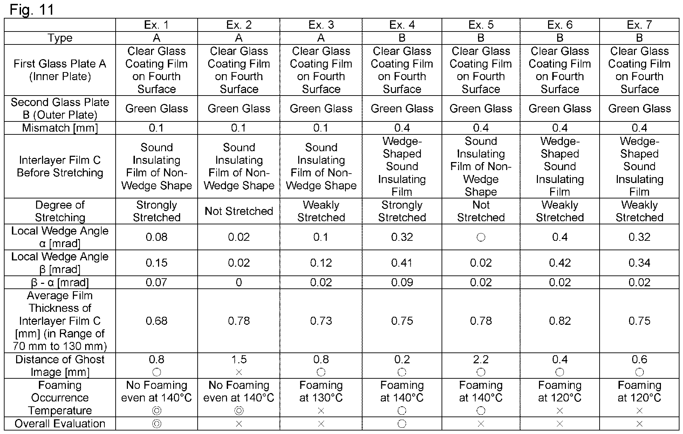

Glass Types A and B are summarized in Table 1, and Ex. 1 to 7 are summarized in Fig. 11.

Table 1

|  | Type A | Type B |
|---|---|---|
| Dimension of Laminated Glass | 1560 mm × 966 mm | 1580 mm × 811 mm |
| Thickness of First Glass Plate A | 1.8 mm | 1.8 mm |
| Thickness of Second Glass Plate B | 1.8 mm | 2.0 mm |
| HUD Image Projection Distance | 6.2 m | 2.5 m |

First, Ex. 1 and Ex. 2 in Fig. 11 are compared. In Ex. 1, as a result of strong stretching of the interlayer film C, the value of $(\beta - \alpha)$, i.e., the difference between the local wedge angle $\beta$ at the HUD display region and the local wedge angle $\alpha$ at a position closer to the bottom edge than the HUD display region was 0.07 [mrad]. Since the value of the local wedge angle $\beta$ at the HUD display region was adequate, the distance of the ghost image was short; and the visibility of the HUD image was good. Thus, the ghost image distance evaluation result was Good. Since the local wedge angle $\alpha$ was small so that the first glass plate A and the second glass plate B were press-bonded in a nearly parallel orientation in the vicinity of the bottom edge of the laminated glass, foaming did not occur in the interlayer film C even at 140°C. Thus, the foaming occurrence evaluation result was Excellent. The overall evaluation was consequently rated as Excellent.

In Ex. 2, by contrast, the interlayer film C was not stretched; and the wedge angle of the interlayer film was substantially zero. As a result, the distance of the ghost image was short; and the visibility of the HUD image was poor. Thus, the ghost image distance evaluation result was Not Good. On the other hand, since the wedge angle of the interlayer film was substantially zero so that the first glass plate A and the second glass plate B were press-bonded in a nearly parallel orientation at and in the vicinity of the bottom edge of the laminated glass, foaming did not occur in the interlayer film C even at 140°C. Thus, the foaming occurrence evaluation result was Excellent. The overall evaluation was consequently rated as Not Good.

In Ex. 3, as a result of weak stretching of the interlayer film C, the value of $(\beta - \alpha)$, i.e., the difference between the local wedge angle $\beta$ at the HUD display region and the local wedge angle $\alpha$ at a position closer to the bottom edge than the HUD display region was 0.02 [mrad]. Since the value of the local wedge angle $\beta$ at the HUD display region was adequate, the distance of the ghost image was short; and the visibility of the HUD image was good. Thus, the ghost image distance evaluation result was Good. However, the local wedge angle $\alpha$ did not become small enough due to insufficient stretching so that the first glass plate A and the second glass plate B were not press-bonded in a nearly parallel orientation at and in the vicinity of the bottom edge of the laminated glass. As a result, foaming occurred in the interlayer film C at 130°C. The foaming occurrence evaluation result was hence Not Good. The overall evaluation was consequently rated as Not Good.

Next, Ex. 4 and Ex. 5 in Fig. 11 are compared. In Ex. 4, the interlayer film C having a constant wedge angle formed in advance was strongly stretched. As a result, the value of $(\beta - \alpha)$, i.e., the difference between the local wedge angle $\beta$ at the HUD display region and the local wedge angle $\alpha$ at a position closer to the bottom edge than the HUD display region was 0.09 [mrad]. Since the value of the local wedge angle $\beta$ at the HUD display region was adequate, the distance of the ghost image was short; and the visibility of the HUD image was good. Thus, the ghost image distance evaluation result was Good. On the other hand, since the wedge angle had been formed in advance, the local wedge angle $\alpha$ did not become small enough so that the first glass plate A and the second glass plate B were not press-bonded in a nearly parallel orientation at and in the vicinity of the bottom edge of the laminated glass. As a result, foaming occurred in the interlayer film C at 140°C. The foaming occurrence evaluation result was thus Good. The overall evaluation was consequently rated as Good.

In Ex. 5, by contrast, the interlayer film C was not stretched; and the wedge angle of the interlayer film was substantially zero. As a result, the distance of the ghost image distance was long; and the visibility of the HUD image was poor. Thus, the ghost image distance evaluation result was ×. On the other hand, since the wedge angle of the interlayer film was substantially zero, the first glass plate A and the second glass plate B were supposed to be press-bonded in a nearly parallel orientation at and in the vicinity of the bottom edge of the laminated glass. However, foaming occurred in the interlayer film C at 140°C. The foaming occurrence evaluation result was hence Good. Consequently, the overall evaluation was rated as Not Good.

In Ex. 6, as a result of weak stretching of the interlayer film C, the value of $(\beta - \alpha)$, i.e., the difference between the local wedge angle $\beta$ at the HUD display region and the local wedge angle $\alpha$ at a position closer to the bottom edge than the HUD display region was 0.02 [mrad]. Since the value of the local wedge angle $\beta$ at the HUD display region was adequate, the distance of the ghost image was short; and the visibility of the HUD image was good. Thus, the ghost image distance evaluation result was Good. However, the local wedge angle $\alpha$ did not become small enough due to insufficient stretching so that the first glass plate A and the second glass plate B were not press-bonded in a nearly parallel orientation at and in the vicinity of the bottom edge of the laminated glass. As a result, foaming occurred in the interlayer film C at 120°C. Thus, the foaming occurrence evaluation result was Not Good. The overall evaluation was consequently rated as Not Good.

Although the value of $\alpha$ was relatively large in both of Ex. 4 and Ex. 6, the foaming occurrence evaluation result of Ex. 4 was Good; and the foaming occurrence evaluation result of Ex. 6 was Not Good. The reason for these results is assumed to be that, since the value of $(\beta - \alpha)$ was larger in Ex. 4 than in Ex. 6, the first glass plate and the second glass plate were brought closer to each other at and in the vicinity of the bottom edge of the laminated glass so that the occurrence of foaming was suppressed. The above effect was also confirmed from comparison of Ex. 4 and Ex. 7.

It has been shown by the above results that, when the formula $(\beta - \alpha) > 0.05$ [mrad] is satisfied, the laminated glass is short in ghost image distance and good in HUD image visibility and is less likely to cause foaming. It has also been shown that it is preferable to satisfy the formula: $\alpha < 0.10$ [mrad].

Although the preferred embodiments and examples have been described above, the present invention is not limited to the above-described embodiments and examples; and various changes, modifications and replacements can be made to the above-described embodiments and examples without departing from the claimed scope of the present invention.

The following supplementary notes are disclosed in relation to the above embodiments.

(Note 1)

A laminated glass comprising: a curved first glass plate; a curved second glass plate; and an interlayer film arranged between the first glass plate and the second glass plate to bond the first glass plate and the second glass plate together, wherein:

assuming a surface of the first glass plate facing away from the interlayer film as a fourth surface, a surface of the first glass plate facing the interlayer film as a third surface, a surface of the second glass plate facing the interlayer film as a second surface and a surface of the second glass plate facing away from the interlayer film as a first surface, the laminated glass comprises a coating film provided on the second surface, the third surface or the fourth surface;

the coating film shows a visible light reflectance of 10% or higher when irradiated with p-polarized visible light at an incident angle of 65 deg;

the interlayer film includes a wedge-shaped cross-section region that gradually increases in thickness from a bottom edge toward a top edge in a state where the laminated is installed in a vehicle; and

the formula $(\beta - \alpha) > 0.05$ [mrad] is satisfied where, assuming, in plan view, a straight line passing through a first point that bisects the top edge and a second point that bisects the bottom edge, $\alpha$ represents a local wedge angle at a position 100 mm from the second point on the straight line; and $\beta$ represents a local wedge angle at a position 500 mm from the second point on the straight line, with the proviso that the local wedge angles $\alpha$ and $\beta$ are determined as follows:

$\alpha =$ ((Thickness of Interlayer Film at 100 mm + 40 mm from Second Point) - (Thickness of Interlayer Film at 100 mm - 40 mm from Second Point)) / 80 mm; and

$\beta =$ ((Thickness of Interlayer Film at 500 mm + 40 mm from Second Point) - (Thickness of Interlayer film at 500 mm - 40 mm from Second Point)) / 80 mm.

(Note 2)

The laminated glass according to Note 1, wherein the formula $\alpha < 0.10$ [mrad] is satisfied.

(Note 3)

The laminated glass according to Note 1 or 2, wherein the formula $\beta < 0.30$ [mrad] is satisfied.

(Note 4)

The laminated glass according to any one of Notes 1 to 3, wherein the interlayer film comprises three or more layers.

(Note 5)

The laminated glass according to Note 4, wherein any of the layers other than both of the outermost layers of the interlayer film has a shear storage modulus lower than those of both of the outermost layers.

(Note 6)

The laminated glass according to any one of Notes 1 to 5, wherein the interlayer film has an average film thickness of 0.80 mm or smaller in a range of 60 mm to 140 mm from the second point on the straight line.

(Note 7)

The laminated glass according to any one of Notes 1 to 6, comprising a molding provided on an outer edge portion of the fourth surface,
wherein an end portion of the interlayer film at the bottom edge side is exposed from the molding.

(Note 8)

The laminated glass according to any one of Notes 1 to 7, wherein:

a total iron content of the first glass plate in terms of the weight percentage of $Fe_2O_3$ is lower than that of the second glass plate; and
the total iron content of the second glass plate in terms of the weight percentage of $Fe_2O_3$ is 0.1% or more.

(Note 9)

The laminated glass according to any one of Notes 1 to 8, comprising a shielding layer provided on an outer edge portion of the second surface at the bottom edge side in plan view,
wherein no shielding layer is provided on an outer edge portion of the fourth surface at the bottom edge side in plan view.

(Note 10)

The laminated glass according to any one of Notes 1 to 9, comprising a shielding layer provided on the second surface and/or the fourth surface,
wherein an information transmission and reception region is provided in an opening of the shielding layer.

(Note 11)

The laminated glass according to any one of Notes 1 to 10, wherein a difference in plate thickness between the first glass plate and the second glass plate is smaller than 0.2 mm.

(Note 12)

The laminated glass according to any one of Notes 1 to 11, comprising a shielding layer provided on the second surface and/or the fourth surface at a region including a range of 60 mm to 540 mm from the second point on the straight line.

(Note 13)

A method for producing laminated glass comprising: a curved first glass plate; a curved second glass plate; and an interlayer film arranged between the first glass plate and the second glass plate to bond the first glass plate and the second glass plate together, the method comprising:

providing a first glass plate with third and fourth surfaces, an interlayer film and a second glass plate with first and second surfaces;
forming a coating film on the second surface, the third surface or the fourth surface, the coating film having a visible light reflectance of 10% or higher when irradiated with p-polarized visible light at an incident angle of 65 deg;
after the forming of the coating film, bending the first glass plate and the second glass plate;
in plan view, stretching at least one edge of two opposite edges and its vicinity of the interlayer film along the one edge; and
after the stretching, press-bonding the first glass plate and the second glass plate with the interlayer film sandwiched between the third surface of the first glass plate and the second surface of the second glass plate,
wherein the stretching is performed to:

form, in the interlayer film, a wedge-shaped cross-section region that gradually increases in thickness from a bottom edge to a top edge of the fourth surface in a state where the laminated glass is installed in a vehicle; and
satisfy the formula $(\beta - \alpha) > 0.05$ [mrad] where, assuming, in plan view, a straight line passing through a first point that bisects the top edge and a second point that bisects the bottom edge, $\alpha$ represents a local wedge angle at a position 100 mm from the second point on the straight line; and $\beta$ represents a local wedge angle at a position 500 mm from the second point on the straight line.

REFERENCE SYMBOLS

1: HUD system
10, 10A, 10B, 10C, 10D, 10E: Laminated glass
11: First glass plate
$11_3$: Third surface
$11_4$: Fourth surface
11t: Top edge
11b: Bottom edge
12: Second glass plate
$12_1$: First surface
$12_2$: Second surface
13, 13A, 131, 132, 133: Interlayer film
14A, 14B: Shielding layer
15: Coating film
16: Information transmission and reception region
17: Molding
50: Light source
60: First optical system
70: Image display element
80: Second optical system
90: Concave mirror

The entire disclosure of Japanese Patent Application No. 2023-052990 filed on March 29, 2023, including its specification, claims, drawings and summary, is incorporated herein by reference in its entirety.

**Claims**

1.  Laminated glass comprising: a curved first glass plate; a curved second glass plate; and an interlayer film arranged between the first glass plate and the second glass plate to bond the first glass plate and the second glass plate together, wherein:

the first glass plate has a fourth surface and a third surface; the second glass plate has a first surface and a second surface;

the fourth surface is a surface of the first glass plate facing away from the interlayer film; the third surface is a surface of the first glass plate facing the interlayer film; the second surface is a surface of the second glass plate facing the interlayer film; the first surface is a surface of the second glass plate facing away from the interlayer film;

the laminated glass comprises a coating film on the second surface, the third surface or the fourth surface;

the coating film is configured to show a visible light reflectance of 10% or higher relative to p-polarized visible light incident at an incident angle of 65 deg;

the interlayer film includes a wedge-shaped cross-section region that gradually increases in thickness from a bottom edge toward a top edge in a state where the laminated glass is installed in a vehicle; and

the formula $(\beta - \alpha) > 0.05$ [mrad] is satisfied where, assuming, in plan view, a straight line passing through a first point that bisects the top edge and a second point that bisects the bottom edge, $\alpha$ represents a local wedge angle at a position 100 mm away from the second point on the straight line; and $\beta$ represents a local wedge angle at a position 500 mm away from the second point on the straight line, with the proviso that the local wedge angles $\alpha$ and $\beta$ are given as follows:

$\alpha$ = ((Thickness of Interlayer Film at 100 mm + 40 mm from Second Point) - (Thickness of Interlayer Film at 100 mm - 40 mm from Second Point)) / 80 mm; and

$\beta$ = ((Thickness of Interlayer Film at 500 mm + 40 mm from Second Point) - (Thickness of Interlayer Film at 500 mm - 40 mm from Second Point)) / 80 mm.

2. The laminated glass according to Claim 1, wherein the formula $\alpha < 0.10$ [mrad] is satisfied.

3. The laminated glass according to Claim 1 or 2, wherein the formula $\beta < 0.30$ [mrad] is satisfied.

4. The laminated glass according to Claim 1 or 2, wherein the interlayer film comprises three or more layers.

5. The laminated glass according to Claim 4, wherein any of the layers other than both of the outermost layers of the interlayer film has a shear storage modulus lower than those of both of the outermost layers.

6. The laminated glass according to Claim 1 or 2, wherein the interlayer film has an average film thickness of 0.80 mm or smaller in a range of 60 mm to 140 mm from the second point on the straight line.

7. The laminated glass according to Claim 1 or 2, comprising a molding arranged on an outer edge portion of the fourth surface,
wherein, at and in the vicinity of the bottom edge, an end portion of the interlayer film is exposed from the molding.

8. The laminated glass according to Claim 1 or 2, wherein:

a total iron content of the first glass plate in terms of the weight percentage of $Fe_2O_3$ is lower than that of the second glass plate; and

the total iron content of the second glass plate in terms of the weight percentage of $Fe_2O_3$ is 0.1% or more.

9. The laminated glass according to Claim 1 or 2, comprising a shielding layer provided on an outer edge portion of the second surface at and in the vicinity of the bottom edge in plan view,
wherein no shielding layer is provided on an outer edge portion of the fourth surface at the bottom edge side in plan view.

10. The laminated glass according to Claim 1 or 2, comprising: a shielding layer provided on the second surface and/or the fourth surface,
wherein an information transmission and reception region is provided in an opening portion of the shielding layer.

11. The laminated glass according to Claim 1 or 2, wherein a difference in plate thickness between the first glass plate and the second glass plate is smaller than 0.2 mm.

12. The laminated glass according to Claim 1 or 2, comprising a shielding layer on the second surface and/or the fourth surface at a region including a range of 60 mm to 540 mm from the second point on the straight line.

13. A method for producing laminated glass comprising: a curved first glass plate; a curved second glass plate; and an interlayer film arranged between the first glass plate and the second glass plate to bond the first glass plate and the second glass plate together, the method comprising:

providing a first glass plate with third and fourth surfaces, an interlayer film and a second glass plate with first and second surfaces;
forming a coating film on the second surface, the third surface or the fourth surface, the coating film having a visible light reflectance of 10% or higher relative to p-polarized visible light incident at an incident angle of 65 deg;
after the forming of the coating film, bending the first glass plate and the second glass plate;
in plan view, stretching at least one of two opposite edge portions of the interlayer film in a direction along the one of the two opposite edge portions; and
after the stretching, press-bonding the first glass plate and the second glass plate with the interlayer film sandwiched between the third surface of the first glass plate and the second surface of the second glass plate, wherein the stretching is performed to:

form, in the interlayer film, a wedge-shaped cross-section region that gradually increases in thickness from a bottom edge to a top edge of the fourth surface in a state where the laminated glass is installed in a vehicle; and
satisfy the formula $(\beta - \alpha) > 0.05$ [mrad] where, assuming, in plan view, a straight line passing through a first point that bisects the top edge and a second point that bisects the bottom edge, $\alpha$ represents a local wedge angle at a position 100 mm away from the second point on the straight line; and $\beta$ represents a local wedge angle at a position 500 mm away from the second point on the straight line.

Fig. 1

Fig. 2A

Fig. 2B

Fig. 3

Fig. 4

Fig. 5A

Fig. 5B

Fig. 5C

Fig. 6A

13

13

Fig. 6B

13

13

Fig. 7

Fig. 8

10B

Fig. 9

10C

Fig. 10A

Fig. 10B

Fig. 11

| | Ex. 1 | Ex. 2 | Ex. 3 | Ex. 4 | Ex. 5 | Ex. 6 | Ex. 7 |
|---|---|---|---|---|---|---|---|
| Type | A | A | A | B | B | B | B |
| First Glass Plate A (Inner Plate) | Clear Glass Coating Film on Fourth Surface | Clear Glass Coating Film on Fourth Surface | Clear Glass Coating Film on Fourth Surface | Clear Glass Coating Film on Fourth Surface | Clear Glass Coating Film on Fourth Surface | Clear Glass Coating Film on Fourth Surface | Clear Glass Coating Film on Fourth Surface |
| Second Glass Plate B (Outer Plate) | Green Glass | Green Glass | Green Glass | Green Glass | Green Glass | Green Glass | Green Glass |
| Mismatch [mm] | 0.1 | 0.1 | 0.1 | 0.4 | 0.4 | 0.4 | 0.4 |
| Interlayer Film C Before Stretching | Sound Insulating Film of Non-Wedge Shape | Sound Insulating Film of Non-Wedge Shape | Sound Insulating Film of Non-Wedge Shape | Wedge-Shaped Sound Insulating Film | Sound Insulating Film of Non-Wedge Shape | Wedge-Shaped Sound Insulating Film | Wedge-Shaped Sound Insulating Film |
| Degree of Stretching | Strongly Stretched | Not Stretched | Weakly Stretched | Strongly Stretched | Not Stretched | Weakly Stretched | Weakly Stretched |
| Local Wedge Angle α [mrad] | 0.08 | 0.02 | 0.1 | 0.32 | ○ | 0.4 | 0.32 |
| Local Wedge Angle β [mrad] | 0.15 | 0.02 | 0.12 | 0.41 | 0.02 | 0.42 | 0.34 |
| β - α [mrad] | 0.07 | 0 | 0.02 | 0.09 | 0.02 | 0.02 | 0.02 |
| Average Film Thickness of Interlayer Film C [mm] (in Range of 70 mm to 130 mm) | 0.68 | 0.78 | 0.73 | 0.75 | 0.78 | 0.82 | 0.75 |
| Distance of Ghost Image [mm] | 0.8 ○ | 1.5 × | 0.8 ○ | 0.2 ○ | 2.2 ○ | 0.4 ○ | 0.6 ○ |
| Foaming Occurrence Temperature | No Foaming even at 140°C ◎ | No Foaming even at 140°C ◎ | Foaming at 130°C × | Foaming at 140°C ○ | Foaming at 140°C ○ | Foaming at 120°C × | Foaming at 120°C × |
| Overall Evaluation | ◎ | × | × | ○ | × | × | × |

## INTERNATIONAL SEARCH REPORT

| International application No. |
| --- |
| **PCT/JP2024/012280** |

**A. CLASSIFICATION OF SUBJECT MATTER**

*C03C 27/12*(2006.01)i; *B60J 1/00*(2006.01)i; *B60J 1/02*(2006.01)i; *C03C 17/34*(2006.01)i; *G02B 5/08*(2006.01)i; *G02B 27/01*(2006.01)i
FI: C03C27/12 N; C03C17/34 Z; B60J1/02 M; B60J1/00 H; G02B5/08 Z; G02B27/01

According to International Patent Classification (IPC) or to both national classification and IPC

**B. FIELDS SEARCHED**

Minimum documentation searched (classification system followed by classification symbols)

C03C27/00-29/00; B32B17/10; B60J1/00; B60J1/02; G02B5/08; G02B27/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2014-024752 A (SAINT-GOBAIN GLASS FRANCE) 06 February 2014 (2014-02-06) claims 1-3, paragraphs [0036]-[0038], table 1, fig. 3 | 1, 4-13 |
| A | | 2-3 |
| Y | WO 2022/207004 A1 (FUYAO GLASS INDUSTRY GROUP CO., LTD.) 06 October 2022 (2022-10-06) examples 1-3, table 1 | 1, 4-13 |
| Y | WO 2022/022886 A1 (SAINT-GOBAIN GLASS FRANCE) 03 February 2022 (2022-02-03) examples 1-6, table 5 | 1, 4-13 |
| Y | JP 2016-107632 A (KURARAY CO., LTD.) 20 June 2016 (2016-06-20) claims 1-3, paragraph [0001], examples, table 1 | 4-5 |
| Y | JP 2013-163627 A (ASAHI GLASS COMPANY, LIMITED) 22 August 2013 (2013-08-22) paragraphs [0009]-[0030], fig. 1 | 7 |

[✓] Further documents are listed in the continuation of Box C.    [✓] See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 May 2024** | **04 June 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2024/012280**

| C. DOCUMENTS CONSIDERED TO BE RELEVANT | | |
|---|---|---|
| Category* | Citation of document, with indication, where appropriate, of the relevant passages | Relevant to claim No. |
| Y | JP 2020-528865 A (PILKINGTON GROUP LIMITED) 01 October 2020 (2020-10-01) paragraphs [0036], [0047] | 8 |
| Y | WO 2017/155066 A1 (NIPPON SHEET GLASS COMPANY, LIMITED) 14 September 2017 (2017-09-14) paragraphs [0023]-[0025], [0054]-[0059], fig. 1-2 | 9-10, 12 |

Form PCT/ISA/210 (second sheet) (July 2022)

EP 4 692 015 A1

## INTERNATIONAL SEARCH REPORT
### Information on patent family members

International application No.

**PCT/JP2024/012280**

| Patent document cited in search report | | | Publication date (day/month/year) | Patent family member(s) | | Publication date (day/month/year) |
|---|---|---|---|---|---|---|
| JP | 2014-024752 | A | 06 February 2014 | US 2010/0314900 A1 <br> claims 1-3, paragraphs [0045]-[0047], fig. 3 <br> WO 2009/071135 A1 <br> EP 2217438 A1 <br> DE 102007059323 A <br> DE 102008008758 A <br> DE 102007059323 A1 <br> KR 10-2010-0094987 A <br> CN 101888927 A <br> ES 2671174 T <br> PL 2217438 T <br> TR 201807499 T <br> PT 2217438 T <br> JP 2011-505330 A | | |
| WO | 2022/207004 | A1 | 06 October 2022 | US 2024/0025156 A1 <br> examples 1-3, table 1 <br> EP 4299309 A1 <br> KR 10-2023-0156941 A | | |
| WO | 2022/022886 | A1 | 03 February 2022 | US 2023/0176374 A1 <br> examples 1-6, table 5 <br> EP 4188699 A1 <br> CN 114341710 A <br> KR 10-2023-0027260 A <br> JP 2023-536238 A | | |
| JP | 2016-107632 | A | 20 June 2016 | US 2018/0290436 A1 <br> claims 1-4, examples, tables 1-3 <br> US 2017/0334173 A1 <br> US 2017/0361575 A1 <br> US 2018/0290437 A1 <br> US 2018/0290439 A1 <br> US 2019/0375196 A1 <br> WO 2016/076336 A1 <br> WO 2016/076337 A1 <br> WO 2016/076338 A1 <br> WO 2016/076339 A1 <br> WO 2016/076340 A1 <br> EP 3219683 A1 <br> EP 3219684 A1 <br> EP 3219685 A1 <br> EP 3219686 A1 <br> EP 3219687 A1 <br> KR 10-2017-0082599 A <br> KR 10-2017-0082614 A <br> KR 10-2017-0082616 A <br> KR 10-2017-0084185 A <br> KR 10-2017-0084220 A <br> CN 107108348 A <br> CN 107108349 A <br> CN 107108350 A | | |

Form PCT/ISA/210 (patent family annex) (July 2022)

33

## INTERNATIONAL SEARCH REPORT
### Information on patent family members

International application No.

**PCT/JP2024/012280**

| Patent document cited in search report | | | Publication date (day/month/year) | Patent family member(s) | | | Publication date (day/month/year) |
|---|---|---|---|---|---|---|---|
| | | | | CN | 107108351 | A | |
| | | | | CN | 107108352 | A | |
| | | | | CN | 111806000 | A | |
| | | | | JP | 2016-108220 | A | |
| | | | | JP | 2016-108221 | A | |
| | | | | JP | 2016-108222 | A | |
| | | | | JP | 2016-108223 | A | |
| | | | | JP | 2016-108224 | A | |
| | | | | JP | 2016-108225 | A | |
| | | | | JP | 2016-108226 | A | |
| | | | | JP | 2016-108227 | A | |
| | | | | JP | 2016-108228 | A | |
| | | | | JP | 2016-108229 | A | |
| | | | | JP | 2016-108230 | A | |
| | | | | JP | 16-76337 | A1 | |
| | | | | JP | 2017-124970 | A | |
| | | | | JP | 2017-124971 | A | |
| | | | | JP | 2017-160112 | A | |
| | | | | JP | 2020-040876 | A | |
| JP | 2013-163627 | A | 22 August 2013 | (Family: none) | | | |
| JP | 2020-528865 | A | 01 October 2020 | US | 2020/0156448 | A1 | |
| | | | | paragraphs [0037], [0046]-[0047] | | | |
| | | | | US | 2022/0212524 | A1 | |
| | | | | WO | 2019/021014 | A1 | |
| | | | | EP | 3658372 | A1 | |
| | | | | CN | 111163932 | A | |
| | | | | JP | 2024-1033 | A | |
| WO | 2017/155066 | A1 | 14 September 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022207004 A
- JP 6065221 B
- US 2933759 A
- JP 2023052990 A